# EUROPEAN PATENT SPECIFICATION

(11) **EP 2 890 838 B1**
(45) Date of publication and mention of the grant of the patent: **30.05.2018**
(21) Application number: 13832362.1
(22) Date of filing: 29.08.2013
(51) Int. Cl.: D01F 6/90, C08L 77/02, C08L 71/12

(54) **POLYAMIDE-POLY(PHENYLENE ETHER) FIBER, ARTICLE, COMPOSITION, AND METHOD**
POLYAMID-POLY(PHENYLENETHER)FASER, ARTIKEL, ZUSAMMENSETZUNG UND VERFAHREN
FIBRE EN POLYAMIDE-POLY(PHÉNYLÈNE ÉTHER), ARTICLE, COMPOSITION ET PROCÉDÉ

(30) Priority: 31.08.2012 US 201261695441 P; 12.10.2012 US 201213650352
(43) Date of publication of application: 08.07.2015
(73) Proprietor: SABIC Global Technologies B.V., 4612 PX Bergen op Zoom (NL)
(72) Inventor: LEE, Jung Ah, Selkirk, New York 12158 (US); TING, Sai-Pei, Selkirk, New York 12158 (US); GUO, Hua, Beijing 100089 (CN)
(74) Representative: Lang, Johannes
(86) International application number: PCT/US2013/057310
(87) International publication number: WO 2014/036275

(56) References cited:
- EP-A1- 0 893 479
- JP-A- 2008 138 120
- JP-B2- 2 855 272
- US-A1- 2006 058 432
- US-A1- 2007 244 231
- US-A1- 2009 030 141
- US-A1- 2011 152 420

## Description

### BACKGROUND OF THE INVENTION

Nylon fibers, including those prepared from the nylons known as polyamide-6 and polyamide-6,6, are widely used in such diverse applications as carpets, ropes, clothing, parachutes, and automotive tires. However, for some applications, particularly industrial applications such as industrial carpet and heat-resistant protective clothing, there is a desire for nylon fibers exhibiting increased flame resistance. And while the addition of flame retardant additives to nylon compositions is known, such additives can be poorly dispersed in the nylon as particles large enough to interfere with the spinning of thin fibers. There remains a need for flame retardant nylon compositions suitable for forming fibers having a variety of thicknesses, including thin fibers.

### BRIEF SUMMARY OF EMBODIMENTS OF THE INVENTION

One embodiment is a fiber comprising a composition comprising the product of melt blending: 58 to 93.9 weight percent of a polyamide consisting of polyamide-6,6; 5 to 35 weight percent of a poly(phenylene ether); 1 to 10 weight percent of a flame retardant comprising a metal dialkylphosphinate; and 0.1 to 2 weight percent of a compatibilizing agent for the polyamide and the poly(phenylene ether); wherein all weight percents are based on the total weight of the composition; wherein the composition excludes poly(phenylene ether)-polysiloxane block copolymers; and wherein the composition comprises a continuous phase comprising the polyamide, and a disperse phase comprising the poly(phenylene ether); wherein the disperse phase comprises disperse phase particles have a mean cross-sectional area less than or equal to 0.9 micrometer², based on the number of disperse phase particles, as measured by scanning electron microscopy.

Another embodiment is a yarn comprising the fiber.

Another embodiment is a fabric comprising the fiber.

Another embodiment is an article comprising the fiber.

Another embodiment is a composition comprising the product of melt blending: 58 to 93.9 weight percent of a polyamide consisting of polyamide-6,6; 5 to 35 weight percent of a poly(phenylene ether); 1 to 10 weight percent of a flame retardant comprising a metal dialkylphosphinate; and 0.1 to 2 weight percent of a compatibilizing agent for the polyamide and the poly(phenylene ether); wherein all weight percents are based on the total weight of the composition; wherein the composition excludes poly(phenylene ether)-polysiloxane block copolymers; and wherein the composition comprises a continuous phase comprising the polyamide, and a disperse phase comprising the poly(phenylene ether); wherein the disperse phase particles have a mean cross-sectional area less than or equal to 0.9 micrometer², based on the number of disperse phase particles, as measured by scanning electron microscopy.

Another embodiment is a method of forming a composition, the method comprising: melt blending 58 to 93.9 weight percent of a polyamide consisting of polyamide-6,6; 5 to 35 weight percent of a poly(phenylene ether); 1 to 10 weight percent of a flame retardant comprising a metal dialkylphosphinate; and 0.1 to 2 weight percent of a compatibilizing agent for the polyamide and the poly(phenylene ether) to form the composition; wherein all weight percents are based on the total weight of the composition; wherein the composition excludes poly(phenylene ether)-polysiloxane block copolymers; and wherein the composition comprises a continuous phase comprising the polyamide, and a disperse phase comprising the poly(phenylene ether); wherein the disperse phase comprises particles having a mean cross-sectional area less than or equal to 0.9 micrometer², as measured by scanning electron microscopy.

These and other embodiments are described in detail below.

### BRIEF DESCRIPTION OF THE DRAWINGS

Figure 1 is a scanning electron micrograph of a sample of the Comparative Example 9 composition.
Figure 2 is a scanning electron micrograph of a sample of the Example 2 composition.
Figure 3 is a scanning electron micrograph of a sample of the Comparative Example 5 composition.
Figure 4 is a schematic diagram of a fiber spinning apparatus.

### DETAILED DESCRIPTION OF THE INVENTION

The present inventors have determined that flame retardant nylon fibers can be prepared from a composition prepared by melt blending specific amounts of a polyamide, poly(phenylene ether), a flame retardant that includes a metal dialkylphosphinate, and a compatibilizing agent. The composition has a continuous phase that includes the polyamide, and a disperse phase that includes the poly(phenylene ether). This disperse phase contains small particles that do not interfere with melt spinning of fibers. While not wishing to be bound by any particular theory of operation, the present inventors believe that one factor contributing to the method's improved ability to melt spin flame retardant fibers is the improved dispersion of the metal dialkylphosphinate flame retardant, which in turn improves fiber spinning and reduces clogging of filters in the melt spinning apparatus. Another factor believed to contribute to the improved melt spinning is the reduced concentration of the metal dialkylphosphinate flame retardant relative to polyamide compositions containing metal dialkylphosphinate but lacking the poly(phenylene ether). The poly(phenylene ether) unexpectedly facilitates dispersion of the metal dialkylphosphinate in the polyamide. So, the fiber spinning advantages of the composition are greater than would be expected based on the additive effects of the flame retardant and the poly(phenylene ether), each used without the other.

One embodiment is a fiber comprising a composition comprising the product of melt blending: 58 to 93.9 weight percent of a polyamide consisting of polyamide-6,6; 5 to 35 weight percent of a poly(phenylene ether); 1 to 10 weight percent of a flame retardant comprising a metal dialkylphosphinate; and 0.1 to 2 weight percent of a compatibilizing agent for the polyamide and the poly(phenylene ether); wherein all weight percents are based on the total weight of the composition; wherein the composition excludes poly(phenylene ether)-polysiloxane block copolymers; and wherein the composition comprises a continuous phase comprising the polyamide, and a disperse phase comprising the poly(phenylene ether); wherein the disperse phase comprises disperse phase particles have a mean cross-sectional area less than or equal to 0.9 micrometer², based on the number of disperse phase particles, as measured by scanning electron microscopy.

The method utilizes a polyamide consisting of polyamide-6,6. In some embodiments, the polyamide has a relative viscosity of 20 to 50, specifically about 25 to about 45, more specifically about 30 to about 40, measured in 90% formic acid according to ASTM D789-07e1. In some embodiments, the polyamide has an amine end group concentration of less than 100 microequivalents amine end group per gram of polyamide as determined by titration with hydrochloric acid. The amine end group concentration can be about 20 to 100 microequivalents per gram, specifically about 30 to about 80 microequivalents per gram, more specifically about 40 to about 70 microequivalents per gram. Amine end group content can be determined by dissolving the polyamide in a suitable solvent and titrating with 0.01 normal hydrochloric acid (HCl) solution using a suitable indication method. The amount of amine end groups is calculated based the volume of HCl solution added to the sample, the volume of HCl used for the blank, the molarity of the HCl solution, and the weight of the polyamide sample. Polyamide-6 and polyamide-6,6 are commercially available from a number of sources and methods for their preparation are known.

The polyamide is used in an amount of 58 to 93.9 weight percent, based on the total weight of the composition (which is equivalent to the total weight of components melt blended to form the composition). Within this range, the polyamide amount can be about 60 to about 85 weight percent, specifically about 65 to about 80 weight percent, more specifically about 70 to about 80 weight percent.

In addition to the polyamide, the method utilizes a poly(phenylene ether). Suitable poly(phenylene ether)s include those comprising repeating structural units having the formula 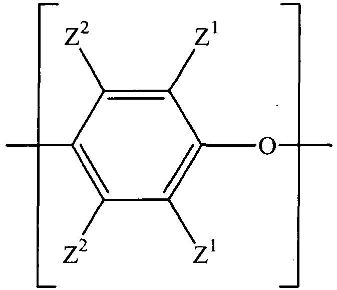 wherein each occurrence of Z¹ is independently halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each occurrence of Z² is independently hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms. As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. As one example, Z¹ can be a di-n-butylaminomethyl group formed by reaction of a terminal 3,5-dimethyl-1,4-phenyl group with the di-n-butylamine component of an oxidative polymerization catalyst.

In some embodiments, the poly(phenylene ether) has an intrinsic viscosity of about 0.2 to about 1 deciliter per gram measured by Ubbelohde viscometer at 25°C in chloroform. Within this range, the poly(phenylene ether) intrinsic viscosity can be about 0.2 to about 0.4 deciliter per gram, specifically 0.25 to 0.35 deciliter per gram.

In some embodiments, the poly(phenylene ether) is a poly(2,6-dimethyl-1,4-phenylene ether) prepared with a morpholine-containing catalyst, wherein a purified sample of poly(2,6-dimethyl-1,4-phenylene ether) prepared by dissolution of the poly(2,6-dimethyl-1,4-phenylene ether) in toluene, precipitation from methanol, reslurry, and isolation has a monomodal molecular weight distribution in the molecular weight range of 250 to 1,000,000 atomic mass units, and comprises less than or equal to 2.2 weight percent of poly(2,6-dimethyl-1,4-phenylene ether) having a molecular weight more than fifteen times the number average molecular weight of the entire purified sample. In some embodiments, the purified sample after separation into six equal poly(2,6-dimethyl-1,4-phenylene ether) weight fractions of decreasing molecular weight comprises a first, highest molecular weight fraction comprising at least 10 mole percent of poly(2,6-dimethyl-1,4-phenylene ether) comprising a terminal morpholine-substituted phenoxy group. The poly(2,6-dimethyl-1,4-phenylene ether) according to these embodiments is further described in U.S. Patent Application Publication No. US 2011/0003962 A1 of Carrillo et al.

In some embodiments, the poly(phenylene ether) is essentially free of incorporated diphenoquinone residues. In the context, "essentially free" means that the fewer than 1 weight percent of poly(phenylene ether) molecules comprise the residue of a diphenoquinone. As described in U.S. Patent No. 3,306,874 to Hay, synthesis of poly(phenylene ether) by oxidative polymerization of monohydric phenol yields not only the desired poly(phenylene ether) but also a diphenoquinone as side product. For example, when the monohydric phenol is 2,6-dimethylphenol, 3,3',5,5'-tetramethyldiphenoquinone is generated. Typically, the diphenoquinone is "reequilibrated" into the poly(phenylene ether) (i.e., the diphenoquinone is incorporated into the poly(phenylene ether) structure) by heating the polymerization reaction mixture to yield a poly(phenylene ether) comprising terminal or internal diphenoquinone residues). For example, when a poly(phenylene ether) is prepared by oxidative polymerization of 2,6-dimethylphenol to yield poly(2,6-dimethyl-1,4-phenylene ether) and 3,3',5,5'-tetramethyldiphenoquinone, reequilibration of the reaction mixture can produce a poly(phenylene ether) with terminal and internal residues of incorporated diphenoquinone. However, such reequilibration reduces the molecular weight of the poly(phenylene ether). Accordingly, when a higher molecular weight poly(phenylene ether) is desired, it may be desirable to separate the diphenoquinone from the poly(phenylene ether) rather than reequilibrating the diphenoquinone into the poly(phenylene ether) chains. Such a separation can be achieved, for example, by precipitation of the poly(phenylene ether) in a solvent or solvent mixture in which the poly(phenylene ether) is insoluble and the diphenoquinone is soluble. For example, when a poly(phenylene ether) is prepared by oxidative polymerization of 2,6-dimethylphenol in toluene to yield a toluene solution comprising poly(2,6-dimethyl-1,4-phenylene ether) and 3,3',5,5'-tetramethyldiphenoquinone, a poly(2,6-dimethyl-1,4-phenylene ether) essentially free of diphenoquinone can be obtained by mixing 1 volume of the toluene solution with about 1 to about 4 volumes of methanol or a methanol/water mixture. Alternatively, the amount of diphenoquinone side-product generated during oxidative polymerization can be minimized (e.g., by initiating oxidative polymerization in the presence of less than 10 weight percent of the monohydric phenol and adding at least 95 weight percent of the monohydric phenol over the course of at least 50 minutes), and/or the reequilibration of the diphenoquinone into the poly(phenylene ether) chain can be minimized (e.g., by isolating the poly(phenylene ether) no more than 200 minutes after termination of oxidative polymerization). These approaches are described in U.S. Patent Application Publication No. US 2009/0211967 A1 of Delsman et al. In an alternative approach utilizing the temperature-dependent solubility of diphenoquinone in toluene, a toluene solution containing diphenoquinone and poly(phenylene ether) can be adjusted to a temperature of about 25°C, at which diphenoquinone is poorly soluble but the poly(phenylene ether) is soluble, and the insoluble diphenoquinone can be removed by solid-liquid separation (e.g., filtration).

In some embodiments, the poly(phenylene ether) comprises 2,6-dimethyl-1,4-phenylene ether units, 2,3,6-trimethyl-1,4-phenylene ether units, or a combination thereof. In some embodiments, the poly(phenylene ether) is a poly(2,6-dimethyl-1,4-phenylene ether). In some embodiments, the poly(phenylene ether) comprises a poly(2,6-dimethyl-1,4-phenylene ether) having an intrinsic viscosity of about 0.2 to about 0.6 deciliter per gram, measured by Ubbelohde viscometer at 25°C in chloroform. Within the range of about 0.2 to about 0.6 deciliter per gram, the poly(2,6-dimethyl-1,4-phenylene ether) having an intrinsic viscosity can be about 0.2 to about 0.4 deciliter per gram, specifically 0.25 to 0.35 deciliter per gram.

The poly(phenylene ether) can comprise molecules having aminoalkyl-containing end group(s), typically located in a position ortho to the hydroxy group. Also frequently present are tetramethyldiphenoquinone (TMDQ) end groups, typically obtained from 2,6-dimethylphenol-containing reaction mixtures in which tetramethyldiphenoquinone by-product is present. The poly(phenylene ether) can be in the form of a homopolymer, a random copolymer, a graft copolymer, an ionomer, or a block copolymer, as well as combinations thereof. The composition excludes poly(phenylene ether)-polysiloxane block copolymers. Accordingly, to the extent that the poly(phenylene ether) can be a block copolymer, it cannot be a poly(phenylene ether)-polysiloxane block copolymer.

The poly(phenylene ether) is used in an amount of 5 to 35 weight percent, based on the total weight of the composition (which is equivalent to the total weight of components melt blended to form the composition). Within this range, the poly(phenylene ether) amount can be about 10 to about 30 weight percent, specifically 15 to 25 weight percent. In some embodiments, the polyamide and the poly(phenylene ether) are present in a weight ratio of 5.06:94.94 to 25:75. In some embodiments, the polyamide and the poly(phenylene ether) are present in a weight ratio of 18.1:81.9 to 25:75.

In addition to the polyamide and the poly(phenylene ether), the method utilizes a flame retardant comprising a metal dialkylphosphinate. As used herein, the term "metal dialkylphosphinate" refers to a salt comprising at least one metal cation and at least one dialkylphosphinate anion. In some embodiments, the metal dialkylphosphinate has the formula 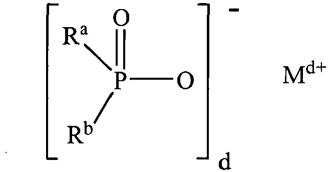 wherein R^{a} and R^{b} are each independently C₁-C₆ alkyl; M is calcium, magnesium, aluminum, or zinc; and d is 2 or 3. Examples of R^{a} and R^{b} include methyl, ethyl, n-propyl, isopropyl, n-butyl, tert-butyl, n-pentyl, and phenyl. In some embodiments, R^{a} and R^{b} are ethyl, M is aluminum, and d is 3 (that is, the metal dialkylphosphinate is aluminum tris(diethylphosphinate)).

In some embodiments, the flame retardant consists of the metal dialkylphosphinate. In some embodiments, the flame retardant consists of aluminum tris(diethylphosphinate).

In other embodiments, the flame retardant comprises other flame retardants in addition to the metal dialkylphosphinate. Such additional flame retardants can include, for example, organophosphate esters, nitrogen-containing flame retardants, metal borates, metal hydroxides, and combinations thereof.

In some embodiments, the flame retardant comprises an organophosphate ester. Exemplary organophosphate ester flame retardants include phosphate esters comprising phenyl groups, substituted phenyl groups, or a combination of phenyl groups and substituted phenyl groups, bis-aryl phosphate esters based upon resorcinol such as, for example, resorcinol bis(diphenyl phosphate), as well as those based upon bisphenols such as, for example, bisphenol A bis(diphenyl phosphate). In some embodiments, the organophosphate ester is selected from tris(alkylphenyl) phosphates (for example, CAS Reg. No. 89492-23-9 or CAS Reg. No. 78-33-1), resorcinol bis(diphenyl phosphate) (CAS Reg. No. 57583-54-7), bisphenol A bis(diphenyl phosphate) (CAS Reg. No. 181028-79-5), triphenyl phosphate (CAS Reg. No. 115-86-6), tris(isopropylphenyl) phosphates (for example, CAS Reg. No. 68937-41-7), and combinations thereof.

In some embodiments the organophosphate ester comprises a bis-aryl phosphate having the formula 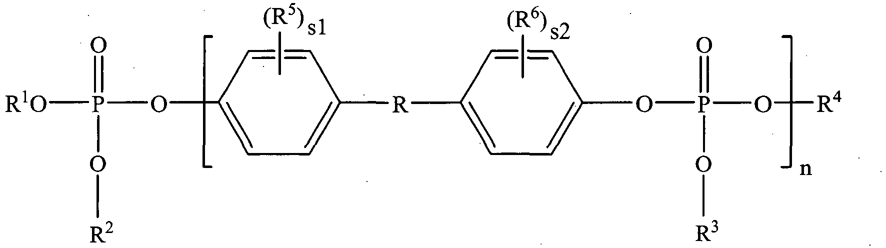 wherein R is independently at each occurrence a C₁-C₁₂ alkylene group; R⁵ and R⁶ are independently at each occurrence a C₁-C₅ alkyl group; R¹, R², and R⁴ are independently a C₁-C₁₂ hydrocarbyl group; R³ is independently at each occurrence a C₁-C₁₂ hydrocarbyl group; n is 1 to 25; and s1 and s2 are independently an integer equal to 0, 1, or 2. In some embodiments OR¹, OR², OR³ and OR⁴ are independently derived from phenol, a monoalkylphenol, a dialkylphenol, or a trialkylphenol.

As readily appreciated by one skilled in the art, the bis-aryl phosphate is derived from a bisphenol. Exemplary bisphenols include 2,2-bis(4-hydroxyphenyl)propane (so-called bisphenol A), 2,2-bis(4-hydroxy-3-methylphenyl)propane, bis(4-hydroxyphenyl)methane, bis(4-hydroxy-3,5-dimethylphenyl)methane and 1,1-bis(4-hydroxyphenyl)ethane. In some embodiments, the bisphenol comprises bisphenol A.

In some embodiments, the flame retardant comprises a nitrogen-containing flame retardant comprising a nitrogen-containing heterocyclic base and a phosphate or pyrophosphate or polyphosphate acid. In some embodiments, the nitrogen-containing flame retardant has the formula 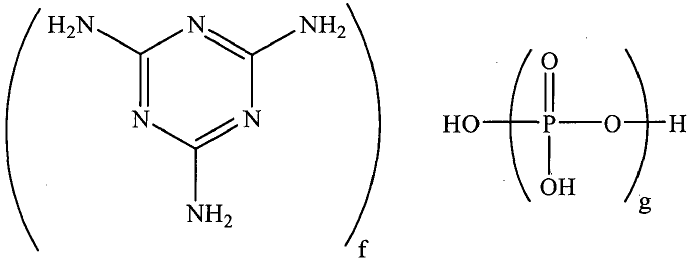 wherein g is 1 to 10,000, and the ratio of f to g is 0.5:1 to 1.7:1, specifically 0.7:1 to 1.3:1, more specifically 0.9:1 to 1.1:1. It will be understood that this formula includes species in which one or more protons are transferred from the phosphate group(s) to the melamine group(s). When g is 1, the nitrogen-containing flame retardant is melamine phosphate (CAS Reg. No. 20208-95-1). When g is 2, the nitrogen-containing flame retardant is melamine pyrophosphate (CAS Reg. No. 15541 60-3). When g is, on average, greater than 2, the nitrogen-containing flame retardant is a melamine polyphosphate (CAS Reg. No. 56386-64-2). In some embodiments, the nitrogen-containing flame retardant is melamine pyrophosphate, melamine polyphosphate, or a mixture thereof. In some embodiments in which the nitrogen-containing flame retardant is melamine polyphosphate, g has an average value of greater than 2 to 10,000, specifically 5 to 1,000, more specifically 10 to 500. In some embodiments in which the nitrogen-containing flame retardant is melamine polyphosphate, g has an average value of greater than 2 to 500. Methods for preparing melamine phosphate, melamine pyrophosphate, and melamine polyphosphate are known in the art, and all are commercially available. For example, melamine polyphosphates may be prepared by reacting polyphosphoric acid and melamine, as described, for example, in U.S. Patent No. 6,025,419 to Kasowski et al., or by heating melamine pyrophosphate under nitrogen at 290°C to constant weight, as described in U.S. Patent No. 6,015,510 to Jacobson et al. In some embodiments, the nitrogen-containing flame retardant comprises melamine cyanurate.

The nitrogen-containing flame retardant can have a low volatility. For example, in some embodiments, the nitrogen-containing flame retardant exhibits less than 1 percent weight loss by thermogravimetric analysis when heated at a rate of 20°C per minute from 25 to 280°C, specifically 25 to 300°C, more specifically 25 to 320°C.

In some embodiments, the flame retardant comprises a metal borate. Suitable metal borates include zinc borate, barium metaborate, magnesium borate, calcium borate, calcium magnesium borate, manganese borate, hydrates of the foregoing metal borates, and combinations thereof.

In some embodiments, the flame retardant comprises a metal hydroxide. Suitable metal hydroxides include all those capable of providing fire retardancy, as well as combinations of such metal hydroxides. The metal hydroxide can be chosen to have substantially no decomposition during processing of the flame retardant thermoplastic composition. Substantially no decomposition is defined herein as amounts of decomposition that do not prevent the flame retardant from providing the desired level of fire retardancy. Exemplary metal hydroxides include magnesium hydroxide (for example, CAS Reg. No. 1309-42-8), aluminum hydroxide (for example, CAS Reg. No. 21645-51-2), cobalt hydroxide (for example, CAS Reg. No. 21041-93-0) and combinations thereof. In some embodiments, the metal hydroxide comprises magnesium hydroxide. In some embodiments it is desirable for the metal hydroxide to contain substantially no water, for example as evidenced by a weight loss of less than 1 weight percent upon drying at 120°C for 1 hour. In some embodiments the metal hydroxide can be coated, for example, with stearic acid or other fatty acid.

The flame retardant is used in an amount of 1 to 10 weight percent, based on the total weight of the composition. Within this range, the flame retardant amount can be 2 to 9 weight percent, specifically about 2 to about 8 weight percent, more specifically about 3 to about 7 weight percent, still more specifically about 3 to about 6 weight percent.

In addition to the polyamide, the poly(phenylene ether), and the flame retardant, the method utilizes a compatibilizing agent for the polyamide and the poly(phenylene ether). As used herein, the term "compatibilizing agent" refers to a polyfunctional compound that interacts with the poly(phenylene ether), the polyamide, or both. This interaction can be chemical (for example, grafting) and/or physical (for example, affecting the surface characteristics of the dispersed phases). In either instance the resulting blend of polyamide and poly(phenylene ether) exhibits improved compatibility, particularly as evidenced by enhanced impact strength, mold knit line strength, and/or tensile elongation.

Examples of compatibilizing agents that can be employed include liquid diene polymers, epoxy compounds, oxidized polyolefin wax, quinones, organosilane compounds, polyfunctional compounds, functionalized poly(phenylene ether)s, and combinations thereof. Compatibilizing agents are further described in U.S. Patent Nos. 5,132,365 to Gallucci, and 6,593,411 and 7,226,963 to Koevoets et al.

In some embodiments, the compatibilizing agent comprises a polyfunctional compound. Polyfunctional compounds that can be employed as a compatibilizing agent are typically of three types. The first type of polyfunctional compound has in the molecule both (a) a carbon-carbon double bond or a carbon-carbon triple bond and (b) at least one carboxylic acid, anhydride, amide, ester, imide, amino, epoxy, orthoester, or hydroxy group. Examples of such polyfunctional compounds include maleic acid; maleic anhydride; fumaric acid; glycidyl acrylate, itaconic acid; aconitic acid; maleimide; maleic hydrazide; reaction products resulting from a diamine and maleic anhydride, maleic acid, fumaric acid, etc.; dichloro maleic anhydride; maleic acid amide; unsaturated dicarboxylic acids (for example, acrylic acid, butenoic acid, methacrylic acid, ethylacrylic acid, pentenoic acid, decenoic acids, undecenoic acids, dodecenoic acids, linoleic acid, etc.); esters, acid amides or anhydrides of the foregoing unsaturated carboxylic acids; unsaturated alcohols (for example, alkanols, crotyl alcohol, methyl vinyl carbinol, 4-pentene-1-ol, 1,4-hexadiene-3-ol, 3-butene-1,4-diol, 2,5-dimethyl-3-hexene-2,5-diol, and alcohols of the formula CₙH₂ₙ₋₅OH, CₙH₂ₙ₋₇OH and CₙH₂ₙ₋₉OH, wherein n is a positive integer from 10 to 30); unsaturated amines resulting from replacing from replacing the -OH group(s) of the above unsaturated alcohols with -NH₂ group(s); and combinations comprising one or more of the foregoing. In some embodiments, the compatibilizing agent comprises maleic anhydride and/or fumaric acid. In some embodiments, the compatibilizing agent comprises fumaric acid.

The second type of polyfunctional compatibilizing agent has both (a) a group represented by the formula (OR) wherein R is hydrogen or an alkyl, aryl, acyl or carbonyl dioxy group and (b) at least two groups each of which can be the same or different selected from carboxylic acid, acid halide, anhydride, acid halide anhydride, ester, orthoester, amide, imido, amino, and various salts thereof. Typical of this group of compatibilizing agents are the aliphatic polycarboxylic acids, acid esters, and acid amides represented by the formula

(R^{I}O)ₘR'(COOR^{II})ₙ(CONR^{III}R^{IV})ₛ

wherein R' is a linear or branched chain, saturated aliphatic hydrocarbon having 2 to 20, or, more specifically, 2 to 10, carbon atoms; R¹ is hydrogen or an alkyl, aryl, acyl, or carbonyl dioxy group having 1 to 10, or, more specifically, 1 to 6, or, even more specifically, 1 to 4 carbon atoms; each R^{II} is independently hydrogen or an alkyl or aryl group having 1 to 20, or, more specifically, 1 to 10 carbon atoms; each R^{III} and R^{IV} are independently hydrogen or an alkyl or aryl group having 1 to 10, or, more specifically, 1 to 6, or, even more specifically, 1 to 4, carbon atoms; m is equal to 1 and (n + s) is greater than or equal to 2, or, more specifically, equal to 2 or 3, and n and s are each greater than or equal to zero and wherein (OR^{I}) is alpha or beta to a carbonyl group and at least two carbonyl groups are separated by 2 to 6 carbon atoms. Obviously, R^{I}, R^{II}, R^{III}, and R^{IV} cannot be aryl when the respective substituent has less than 6 carbon atoms.

Suitable polycarboxylic acids include, for example, citric acid, malic acid, and agaricic acid, including the various commercial forms thereof, such as for example, the anhydrous and hydrated acids; and combinations comprising one or more of the foregoing. In one embodiment, the compatibilizing agent comprises citric acid. Illustrative of esters useful herein include, for example, acetyl citrate, monostearyl and/or distearyl citrates, and the like. Suitable amides useful herein include, for example, N,N'-diethyl citric acid amide; N-phenyl citric acid amide; N-dodecyl citric acid amide; N,N'-didodecyl citric acid amide; and N-dodecyl malic acid. Derivatives include the salts thereof, including the salts with amines and the alkali and alkaline metal salts. Examples of suitable salts include calcium malate, calcium citrate, potassium malate, and potassium citrate.

The third type of polyfunctional compatibilizing agent has in the molecule both (a) an acid halide group and (b) at least one carboxylic acid, anhydride, ester, epoxy, orthoester, or amide group, preferably a carboxylic acid or anhydride group. Examples of compatibilizing agents within this group include trimellitic anhydride acid chloride, chloroformyl succinic anhydride, chloroformyl succinic acid, chloroformyl glutaric anhydride, chloroformylglutaric acid, chloroacetylsuccinic anhydride, chloroacetylsuccinic acid, trimellitic acid chloride, and chloroacetylglutaric acid. In some embodiments, the compatibilizing agent comprises trimellitic anhydride acid chloride.

In some embodiments, the compatibilizing agent is selected from fumaric acid, maleic acid, maleic anhydride, citric acid, and combinations thereof. Fumaric acid is a presently preferred compatibilizing agent due to its superior effectiveness and low toxicity. Maleic anhydride and maleic acid are also effective at comparable concentrations, however in order to employ them in production processes additional appropriate safety procedures may be required. Citric acid is also useful as a compatibilizing agent; however concentrations at the higher end of disclosed ranges may be required in order to produce comparable results when preparing citric acid compatibilized blends. The foregoing compatibilizing agents may be added directly to the melt blend or pre-reacted with either or both of the poly(phenylene ether) and the polyamide.

The compatibilizing agent is used in an amount of 0.1 to 2 weight percent, based on the total weight of the composition. Within this range, the compatibilizing agent amount can be about 0.2 to about 1.5 weight percent, specifically about 0.3 to about 1 weight percent, more specifically about 0.3 to about 0.5 weight percent.

The composition can, optionally, further include one or more additives known in the thermoplastics art. For example, the composition can, optionally, further comprise an additive chosen from stabilizers, lubricants, processing aids, drip retardants, UV blockers, dyes, pigments, antioxidants, anti-static agents, mineral oil, metal deactivators, antiblocking agents, and the like, and combinations thereof. When present, such additives are typically used in a total amount of less than or equal to 2 weight percent, specifically less than or equal to 1 weight percent. In some embodiments, the composition excludes additives.

In some embodiments, the composition excludes poly(phenylene ether)-polysiloxane block copolymers. In some embodiments, the composition excludes impact modifiers. In some embodiments, the composition excludes glass fibers. In some embodiments, the composition excludes electrically conductive fillers, such as carbon nanotubes and conductive carbon black. In some embodiments, the composition excludes all fillers.

In some embodiments, the method of preparing the composition includes two melt blending steps. In the first melt blending step, the poly(phenylene ether), the flame retardant, and the compatibilizing agent are melt blended with 15 to 70 weight percent of the polyamide, based on the weight of the polyamide, to form an intermediate composition. Within the range of 15 to 70 weight percent, the amount of polyamide used in the first melt blending step can be 20 to 60 weight percent, specifically about 25 to about 50 weight percent, more specifically about 30 to about 40 weight percent. In the second melt blending step, the intermediate composition is melt blended with the remainder of the polyamide to form the composition. In some embodiments, the melt blending the poly(phenylene ether), the flame retardant, and the compatibilizing agent with 15 to 70 weight percent of the polyamide and the melt blending the intermediate composition with the remainder of the polyamide to form the composition are conducted within a single pass through an extruder. In other embodiments, the melt blending the poly(phenylene ether), the flame retardant, and the compatibilizing agent with 15 to 70 weight percent of the polyamide is conducted within a first pass through a first extruder, and said melt blending the intermediate composition with the remainder of the polyamide to form the composition is conducted within a second pass through a second extruder that is the same as or different from the first extruder. The melt-blending can be performed using common equipment such as ribbon blenders, Henschel mixers, Banbury mixers, drum tumblers, single-screw extruders, twin-screw extruders, multi-screw extruders, co-kneaders, and the like. For example, the present composition can be prepared by melt-blending the components in a twin-screw extruder at a temperature of about 180 to about 320°C, specifically about 250 to about 310°C.

The composition comprises a continuous phase comprising the polyamide, and a disperse phase comprising the poly(phenylene ether). The disperse phase particles are small. Specifically, the disperse phase comprises particles having a mean cross-sectional area less than or equal to 0.9 micrometer², specifically less than or equal to 0.7 micrometer², more specifically less than or equal to 0.5 micrometer², still more specifically less than or equal to 0.45 micrometer², even more specifically less than or equal to 0.4 micrometer², as measured by scanning electron microscopy. In some embodiments, the mean cross-sectional area is 0.1 to 0.9 micrometer², specifically 0.1 to 0.7 micrometer², more specifically 0.1 to 0.5 micrometer², even more specifically 0.2 to 0.5 micrometer², yet more specifically 0.2 to 0.4 micrometer². In some embodiments, the mean cross-sectional area is associated with a standard deviation less than or equal to about 0.9 micrometer², specifically less than or equal to about 0.7 micrometer², more specifically less than or equal to about 0.6 micrometer². In some embodiments, the standard deviation associated with the mean cross-sectional area is 0.2 to 0.9 micrometer², specifically 0.3 to 0.8 micrometer², more specifically 0.3 to 0.7 micrometer², even more specifically 0.3 to 0.6 micrometer². A procedure for determining mean cross-sectional area and the associated standard deviation is provided in the working examples.

In a very specific embodiment of the fiber, the polyamide is polyamide-6,6 having a relative viscosity of 20 to 50 measured at 23°C according to ASTM D789-07 in 90% formic acid, the polyamide amount is 66 to 82.8 weight percent; the poly(phenylene ether) is a poly(2,6-dimethyl-1,4-phenylene ether) having an intrinsic viscosity of 0.25 to 0.35 as measured at 25°C in chloroform, the poly(phenylene ether) amount is 15 to 25 weight percent, the polyamide and the poly(phenylene ether) are present in a weight ratio of 15.3:84.7 to 25:75, the flame retardant consists of aluminum tris(diethylphosphiriate), the flame retardant amount is 2 to 9 weight percent, the compatibilizing agent comprises fumaric acid, the compatibilizing agent amount is 0.2 to 1 weight percent; and the composition excludes polymers other than the polyamide and the poly(phenylene ether). In some embodiments, the melt blending comprises melt blending the poly(phenylene ether), the flame retardant, and the compatibilizing agent with 20 to 60 weight percent of the polyamide-6,6, based on the weight of the polyamide-6,6, to form an intermediate composition; and melt blending the intermediate composition with the remainder of the polyamide-6,6 to form the composition.

The composition is particularly suitable for forming fiber via melt spinning. Melt spinning methods and apparatuses are known in the art. A detailed method for melt spinning the composition is described in the working examples below. While melt spinning is the presently preferred method of forming the fiber, it is also possible to form the fiber by a solution spinning method. Relative to solution spinning, melt spinning has the advantage of avoiding the solvent handling and disposal. The composition makes it possible to prepare fibers at least as thin as 2 denier per filament, which means that 9000 meters of a single continuous fiber have a mass of 2 grams. In some embodiments, the fiber has a thickness in the range of 2 to 10 denier per filament, specifically 2 to 8 denier per filament, more specifically 2 to 6 denier per filament.

The invention includes yarns, fabrics, and articles comprising the fiber described above. The term "yarn" refers to a bundle of at least two fibers, at least one of the fibers being the inventive fiber. As examples of articles, the fiber is useful for make flame retardant carpet and flame retardant clothing.

The invention includes the composition used to form the fiber. Thus, one embodiment is a composition comprising the product of melt blending: 58 to 93.9 weight percent of a polyamide consisting of polyamide-6,6; 5 to 35 weight percent of a poly(phenylene ether); 1 to 10 weight percent of a flame retardant comprising a metal dialkylphosphinate; and 0.1 to 2 weight percent of a compatibilizing agent for the polyamide and the poly(phenylene ether); wherein all weight percents are based on the total weight of the composition; wherein the composition excludes poly(phenylene ether)-polysiloxane block copolymers; and wherein the composition comprises a continuous phase comprising the polyamide, and a disperse phase comprising the poly(phenylene ether); wherein the disperse phase particles have a mean cross-sectional area less than or equal to 0.9 micrometer², based on the number of disperse phase particles, as measured by scanning electron microscopy. All of the variations described above for the fiber apply as well to the composition. In some embodiments, the mean cross-sectional area is associated with a standard deviation less than or equal to 0.9 micrometer². In some embodiments, the mean cross-sectional area is less than or equal to 0.7 micrometer², specifically less than or equal to 0.5 micrometer². In some embodiments, the melt blending comprises melt blending the poly(phenylene ether), the flame retardant, and the compatibilizing agent with 20 to 60 weight percent of the polyamide, based on the weight of the polyamide, to form an intermediate composition; and melt blending the intermediate composition with the remainder of the polyamide to form the composition. In some embodiments, the polyamide is polyamide-6,6. In some embodiments, the polyamide and the poly(phenylene ether) are present in a weight ratio of 5.06:94.94 to 25:75. In some embodiments, the composition excludes polymers other than the polyamide and the poly(phenylene ether).

In a very specific embodiment of the composition, the polyamide is polyamide-6,6 having a relative viscosity of 20 to 50 measured at 23°C according to ASTM D789-07 in 90% formic acid; the polyamide amount is 66 to 82.8 weight percent; the poly(phenylene ether) is a poly(2,6-dimethyl-1,4-phenylene ether) having an intrinsic viscosity of 0.25 to 0.35 as measured at 25°C in chloroform; the poly(phenylene ether) amount is 15 to 25 weight percent; the polyamide and the poly(phenylene ether) are present in a weight ratio of 18.1:81.9 to 25:75; the flame retardant consists of aluminum tris(diethylphosphinate); the flame retardant amount is 2 to 9 weight percent; the compatibilizing agent comprises fumaric acid; the compatibilizing agent amount is 0.2 to 1 weight percent; and the composition excludes polymers other than the polyamide and the poly(phenylene ether).

Another embodiment is a method of forming the composition, the method comprising: melt blending 58 to 93.9 weight percent of a polyamide consisting of polyamide-6,6; 5 to 35 weight percent of a poly(phenylene ether); 1 to 10 weight percent of a flame retardant comprising a metal dialkylphosphinate; and 0.1 to 2 weight percent of a compatibilizing agent for the polyamide and the poly(phenylene ether) to form the composition; wherein all weight percents are based on the total weight of the composition; wherein the composition excludes poly(phenylene ether)-polysiloxane block copolymers; and wherein the composition comprises a continuous phase comprising the polyamide, and a disperse phase comprising the poly(phenylene ether); wherein the disperse phase comprises particles having a mean cross-sectional area less than or equal to 0.9 micrometer², as measured by scanning electron microscopy. All of the variations described above for the fiber apply as well to the method of forming the composition. In some embodiments, the mean cross-sectional area is associated with a standard deviation less than or equal to 0.9 micrometer². In some embodiments, the mean cross-sectional area is less than or equal to 0.5 micrometer². In some embodiments, the melt blending comprises melt blending the poly(phenylene ether), the flame retardant, and the compatibilizing agent with 20 to 60 weight percent of the polyamide, based on the weight of the polyamide, to form an intermediate composition; and melt blending the intermediate composition with the remainder of the polyamide to form the composition. In some of these embodiments, the melt blending the poly(phenylene ether), the flame retardant, and the compatibilizing agent with 15 to 70 weight percent of the polyamide and the melt blending the intermediate composition with the remainder of the polyamide to form the composition are conducted within a single pass through an extruder. In others of these embodiments, the melt blending the poly(phenylene ether), the flame retardant, and the compatibilizing agent with 15 to 70 weight percent of the polyamide is conducted within a first pass through a first extruder, and the melt blending the intermediate composition with the remainder of the polyamide to form the composition is conducted within a second pass through a second extruder that is the same as or different from the first extruder. The polyamide is polyamide-6,6. In some embodiments, the polyamide and the poly(phenylene ether) are present in a weight ratio of 5.06:94.94 to 25:75. In some embodiments, the composition excludes polymers other than the polyamide and the poly(phenylene ether).

In a very specific embodiment of the method of forming the composition, the polyamide is polyamide-6,6 having a relative viscosity of 20 to 50 measured at 23°C according to ASTM D789-07 in 90% formic acid; the polyamide amount is 66 to 82.8 weight percent; the poly(phenylene ether) is a poly(2,6-dimethyl-1,4-phenylene ether) having an intrinsic viscosity of 0.25 to 0.35 as measured at 25°C in chloroform; the poly(phenylene ether) amount is 15 to 25 weight percent; the polyamide and the poly(phenylene ether) are present in a weight ratio of 18.1:81.9 to 25:75; the flame retardant consists of aluminum tris(diethylphosphinate); the flame retardant amount is 2 to 9 weight percent; the compatibilizing agent comprises fumaric acid; and the compatibilizing agent amount is 0.2 to 1 weight percent. In some embodiments, the melt blending comprises melt blending the poly(phenylene ether), the flame retardant, and the compatibilizing agent with 20 to 60 weight percent of the polyamide-6,6, based on the weight of the polyamide-6,6, to form an intermediate composition; and melt blending the intermediate composition with the remainder of the polyamide-6,6 to form the composition.

The invention includes compositions formed by any of the above-described methods.

All ranges disclosed herein are inclusive of the endpoints, and the endpoints are independently combinable with each other. Each range disclosed herein constitutes a disclosure of any point or sub-range lying within the disclosed range.

The invention includes at least the following embodiments.

Embodiment 1: A fiber comprising a composition comprising the product of melt blending: 58 to 93.9 weight percent of a polyamide consisting of polyamide-6,6; 5 to 35 weight percent of a poly(phenylene ether); 1 to 10 weight percent of a flame retardant comprising a metal dialkylphosphinate; and 0.1 to 2 weight percent of a compatibilizing agent for the polyamide and the poly(phenylene ether); wherein all weight percents are based on the total weight of the composition; wherein the composition excludes poly(phenylene ether)-polysiloxane block copolymers; and wherein the composition comprises a continuous phase comprising the polyamide, and a disperse phase comprising the poly(phenylene ether); wherein the disperse phase comprises disperse phase particles have a mean cross-sectional area less than or equal to 0.9 micrometer², based on the number of disperse phase particles, as measured by scanning electron microscopy.

Embodiment 2: The fiber of embodiment 1, wherein the mean cross-sectional area is associated with a standard deviation less than or equal to 0.9 micrometer².

Embodiment 3: The fiber of embodiment 1 or 2, wherein the mean cross-sectional area is less than or equal to 0.7 micrometer².

Embodiment 4: The fiber of any of embodiments 1-3, wherein said melt blending comprises melt blending the poly(phenylene ether), the flame retardant, and the compatibilizing agent with 15 to 70 weight percent of the polyamide, based on the weight of the polyamide, to form an intermediate composition; and melt blending the intermediate composition with the remainder of the polyamide to form the composition.

Embodiment 5: The fiber of any of embodiments 1-4, wherein the polyamide has a relative viscosity of 20 to 50 measured at 23°C according to ASTM D789-07 in 90% formic acid.

Embodiment 6: The fiber of any of embodiments 1-5, wherein the polyamide has an amine end group concentration of less than or equal to 100 microequivalents per gram.

Embodiment 7: The fiber of any of embodiments 1-6, wherein the poly(phenylene ether) has an intrinsic viscosity of 0.25 to 0.35 as measured at 25°C in chloroform.

Embodiment 8: The fiber of any of embodiments 1-7, wherein the poly(phenylene ether) and the polyamide are present in a weight ratio of 5.06:94.94 to 25:75.

Embodiment 9: The fiber of any of embodiments 1-8, wherein the flame retardant consists of the metal dialkylphosphinate.

Embodiment 10: The fiber of any of embodiments 1-9, wherein the compatibilizing agent comprises fumaric acid.

Embodiment 11: The fiber of any of embodiments 1-10, wherein the composition excludes polymers other than the polyamide and the poly(phenylene ether).

Embodiment 12: The fiber of embodiment 1, wherein the polyamide is polyamide-6,6 having a relative viscosity of 20 to 50 measured at 23°C according to ASTM D789-07 in 90% formic acid; wherein the polyamide amount is 66 to 82.8 weight percent; wherein the poly(phenylene ether) is a poly(2,6-dimethyl-1,4-phenylene ether) having an intrinsic viscosity of 0.25 to 0.35 as measured at 25°C in chloroform; wherein the poly(phenylene ether) amount is 15 to 25 weight percent; wherein the poly(phenylene ether) and the polyamide are present in a weight ratio of 15.3:84.7 to 25:75; wherein the flame retardant consists of aluminum tris(diethylphosphinate); wherein the flame retardant amount is 2 to 9 weight percent; wherein the compatibilizing agent comprises fumaric acid; wherein the compatibilizing agent amount is 0.2 to 1 weight percent; wherein the mean cross-sectional area is associated with a standard deviation less than or equal to 0.9 micrometer²; and wherein the composition excludes polymers other than the polyamide and the poly(phenylene ether).

Embodiment 13: A fiber comprising a composition comprising the product of melt blending: 66 to 82.8 weight percent of a polyamide-6,6 having a relative viscosity of 20 to 50 measured at 23°C according to ASTM D789-07 in 90% formic acid; 15 to 25 weight percent of a poly(2,6-dimethyl-1,4-phenylene ether) having an intrinsic viscosity of 0.25 to 0.35 as measured at 25°C in chloroform; 2 to 9 weight percent of a flame retardant consisting of aluminum tris(diethylphosphinate); and 0.2 to 1 weight percent of a compatibilizing agent comprising fumaric acid; wherein all weight percents are based on the total weight of the composition; wherein the composition excludes poly(phenylene ether)-polysiloxane block copolymers; wherein the composition comprises a continuous phase comprising the polyamide, and a disperse phase comprising the poly(phenylene ether); wherein the disperse phase comprises disperse phase particles have a mean cross-sectional area less than or equal to 0.9 micrometer², based on the number of disperse phase particles, as measured by scanning electron microscopy; wherein the mean cross-sectional area is associated with a standard deviation less than or equal to 0.9 micrometer²; and wherein the composition excludes polymers other than the polyamide and the poly(phenylene ether).

Embodiment 14: The fiber of embodiment 12, wherein said melt blending comprises melt blending the poly(phenylene ether), the flame retardant, and the compatibilizing agent with 20 to 60 weight percent of the polyamide-6,6, based on the weight of the polyamide-6,6, to form an intermediate composition; and melt blending the intermediate composition with the remainder of the polyamide-6,6 to form the composition.

Embodiment 15: A yarn comprising the fiber of any of embodiments 1-14.

Embodiment 16: A fabric comprising the fiber of any of embodiments 1-14.

Embodiment 17: An article comprising the fiber of any of embodiments 1-14.

Embodiment 18: The article of embodiment 17, wherein the article is a carpet.

Embodiment 19: The article of embodiment 17, wherein the article is an article of clothing.

Embodiment 20: A composition comprising the product of melt blending: 58 to 93.9 weight percent of a polyamide consisting of polyamide-6,6; 5 to 35 weight percent of a poly(phenylene ether); 1 to 10 weight percent of a flame retardant comprising a metal dialkylphosphinate; and 0.1 to 2 weight percent of a compatibilizing agent for the polyamide and the poly(phenylene ether); wherein all weight percents are based on the total weight of the composition; wherein the composition excludes poly(phenylene ether)-polysiloxane block copolymers; and wherein the composition comprises a continuous phase comprising the polyamide, and a disperse phase comprising the poly(phenylene ether); wherein the disperse phase particles have a mean cross-sectional area less than or equal to 0.9 micrometer², based on the number of disperse phase particles, as measured by scanning electron microscopy.

Embodiment 21: The composition of embodiment 20, wherein the mean cross-sectional area is associated with a standard deviation less than or equal to 0.9 micrometer².

Embodiment 22: The composition of embodiment 20 or 21, wherein the mean cross-sectional area is less than or equal to 0.7 micrometer².

Embodiment 23: The composition of any of embodiments 20-22, wherein said melt blending comprises melt blending the poly(phenylene ether), the flame retardant, and the compatibilizing agent with 20 to 60 weight percent of the polyamide, based on the weight of the polyamide, to form an intermediate composition; and melt blending the intermediate composition with the remainder of the polyamide to form the composition.

Embodiment 24: The composition of any of embodiments 20-23, wherein the poly(phenylene ether) and the polyamide are present in a weight ratio of 5.06:94.94 to 25:75.

Embodiment 25: The composition of any of embodiments 20-24, excluding polymers other than the polyamide and the poly(phenylene ether).

Embodiment 26: The composition of embodiment 20, wherein the polyamide is polyamide-6,6 having a relative viscosity of 20 to 50 measured at 23°C according to ASTM D789-07 in 90% formic acid; wherein the polyamide amount is 66 to 82.8 weight percent; wherein the poly(phenylene ether) is a poly(2,6-dimethyl-1,4-phenylene ether) having an intrinsic viscosity of 0.25 to 0.35 as measured at 25°C in chloroform; wherein the poly(phenylene ether) amount is 15 to 25 weight percent; wherein the poly(phenylene ether) and the polyamide are present in a weight ratio of 18.1:81.9 to 25:75; wherein the flame retardant consists of aluminum tris(diethylphosphinate); wherein the flame retardant amount is 2 to 9 weight percent; wherein the compatibilizing agent comprises fumaric acid; wherein the compatibilizing agent amount is 0.2 to 1 weight percent; wherein the mean cross-sectional area is associated with a standard deviation less than or equal to 0.9 micrometer²; and wherein the composition excludes polymers other than the polyamide and the poly(phenylene ether).

Embodiment 27: The composition of embodiment 26, wherein said melt blending comprises melt blending the poly(phenylene ether), the flame retardant, and the compatibilizing agent with 20 to 60 weight percent of the polyamide, based on the weight of the polyamide, to form an intermediate composition; and melt blending the intermediate composition with the remainder of the polyamide to form the composition.

Embodiment 28: A method of forming a composition, the method comprising: melt blending 58 to 93.9 weight percent of a polyamide consisting of polyamide-6,6; 5 to 35 weight percent of a poly(phenylene ether); 1 to 10 weight percent of a flame retardant comprising a metal dialkylphosphinate; and 0.1 to 2 weight percent of a compatibilizing agent for the polyamide and the poly(phenylene ether) to form the composition; wherein all weight percents are based on the total weight of the composition; wherein the composition excludes poly(phenylene ether)-polysiloxane block copolymers; and wherein the composition comprises a continuous phase comprising the polyamide, and a disperse phase comprising the poly(phenylene ether); wherein the disperse phase comprises particles having a mean cross-sectional area less than or equal to 0.9 micrometer², as measured by scanning electron microscopy.

Embodiment 29: The method of embodiment 28, wherein the mean cross-sectional area is associated with a standard deviation less than or equal to 0.9 micrometer².

Embodiment 30: The method of embodiment 28 or 29, wherein the mean cross-sectional area is less than or equal to 0.7 micrometer².

Embodiment 31: The method of any of embodiments 28-30, wherein said melt blending comprises melt blending the poly(phenylene ether), the flame retardant, and the compatibilizing agent with 20 to 60 weight percent of the polyamide, based on the weight of the polyamide, to form an intermediate composition; and melt blending the intermediate composition with the remainder of the polyamide to form the composition.

Embodiment 32: The method of any of embodiments 28-31, wherein said melt blending the poly(phenylene ether), the flame retardant, and the compatibilizing agent with 15 to 70 weight percent of the polyamide and said melt blending the intermediate composition with the remainder of the polyamide to form the composition are conducted within a single pass through an extruder.

Embodiment 33: The method of any of embodiments 28-32, wherein said melt blending the poly(phenylene ether), the flame retardant, and the compatibilizing agent with 15 to 70 weight percent of the polyamide is conducted within a first pass through a first extruder, and said melt blending the intermediate composition with the remainder of the polyamide to form the composition is conducted within a second pass through a second extruder that is the same as or different from the first extruder.

Embodiment 34: The method of any of embodiments 28-33, wherein the poly(phenylene ether) and the polyamide are present in a weight ratio of 5.06:94.94 to 25:75.

Embodiment 35: The method of any of embodiments 28-34, wherein the composition excludes polymers other than the polyamide and the poly(phenylene ether).

Embodiment 36: The method of embodiment 28, wherein the polyamide is polyamide-6,6 having a relative viscosity of 20 to 50 measured at 23°C according to ASTM D789-07 in 90% formic acid; wherein the polyamide amount is 66 to 82.8 weight percent; wherein the poly(phenylene ether) is a poly(2,6-dimethyl-1,4-phenylene ether) having an intrinsic viscosity of 0.25 to 0.35 as measured at 25°C in chloroform; wherein the poly(phenylene ether) amount is 15 to 25 weight percent; wherein the poly(phenylene ether) and the polyamide are present in a weight ratio of 18.1:81.9 to 25:75; wherein the flame retardant consists of aluminum tris(diethylphosphinate); wherein the flame retardant amount is 2 to 9 weight percent; wherein the compatibilizing agent comprises fumaric acid; wherein the mean cross-sectional area is associated with a standard deviation less than or equal to 0.9 micrometer²; and wherein the compatibilizing agent amount is 0.2 to 1 weight percent.

Embodiment 37: The method of embodiment 36, wherein said melt blending comprises melt blending the poly(phenylene ether), the flame retardant, and the compatibilizing agent with 20 to 60 weight percent of the polyamide-6,6, based on the weight of the polyamide-6,6, to form an intermediate composition; and melt blending the intermediate composition with the remainder of the polyamide-6,6 to form the composition.

The invention is further illustrated by the following non-limiting examples.

### EXAMPLES 1-3, COMPARATIVE EXAMPLES 1-10

These examples illustrate the use of poly(phenylene ether) to preserve flame retardancy while reducing flame retardant loading in polyamide-6,6, as well as the unexpected ability of the poly(phenylene ether) to promote dispersion of the flame retardant in the polyamide-6,6.

Compositions were prepared using the components summarized in Table 1.

**Table 1**

| Component | Description |
|---|---|
| PA66 | Polyamide-6,6 having a relative viscosity of about 34-38 measured in 90% formic acid according to ASTM D789, and an amine end group concentration of about 49-53 microequivalents per gram; obtained as VYDYNE 21ZLV from Ascend. |
| PPE | Poly(2,6-dimethyl-1,4-phenylene ether), CAS Reg. No. 25134-01-4, having an intrinsic viscosity of about 0.30 deciliter per gram measured in chloroform at 25°C, and a weight average molecular weight of about 45,000 atomic mass units; obtained as PPO 630 from SABIC Innovative Plastics. |
| FA | Fumaric acid, CAS Reg. No. 110-17-8; obtained from Ashland Chemical. |
| DEPAL | Aluminum tris(diethylphosphinate), CAS Reg. No. 225789-38-8, obtained in powder form as EXOLIT OP 1230 from Clariant. |

Compositions are summarized in Table 2, where component amounts are in parts by weight. Components were melt blended in a Werner & Pfleiderer 30 millimeter internal diameter twin-screw extruder operated at 300 rotations per minute and a material throughput of about 23 kilograms/hour (50 pounds/hour). To prepare the compositions of Comparative Examples 1-6, a dry blend of poly(phenylene ether), flame retardant, and fumaric acid was fed into the upstream feed port of the extruder, and the polyamide was fed into the downstream port. The extruder temperature was maintained at 204°C (400°F) in zone 1 (the most upstream zone), at 299°C (570°F) in zones 2-10, and at 304°C (580°F) at the die. The extrudate was cooled and pelletized. To prepare the compositions of Comparative Examples 7-10, polyamide-6,6 and flame retardant, if any, were added to the feed throat of the extruder. To prepare the compositions of Examples 1-3, a two-step compounding process was used. First, the components other than polyamide-6,6 were compounded with sufficient polyamide-6,6 to form an intermediate composition in which components other than polyamide-6,6 were at twice their concentration in the final composition. Second, the intermediate composition was compounded with an equal weight of polyamide-6,6 to yield the final composition having the component amounts shown in Table 2.

Table 2 also summarizes flame retardancy test results for injection molded test samples. Flame retardancy of injection molded flame bars was determined according to Underwriter's Laboratory Bulletin 94 "Tests for Flammability of Plastic Materials, UL 94", 20 mm Vertical Burning Flame Test. Before testing, flame bars with a thickness of 1.5 millimeters were conditioned at 23°C and 50% relative humidity for at least 48 hours. In the UL 94 20 mm Vertical Burning Flame Test, a set of five flame bars is tested. For each bar, a flame is applied to the bar then removed, and the time required for the bar to self-extinguish (first afterflame time, t1) is noted. The flame is then reapplied and removed, and the time required for the bar to self-extinguish (second afterflame time, t2) and the post-flame glowing time (afterglow time, t3) are noted. To achieve a rating of V-0, the afterflame times t1 and t2 for each individual specimen must be less than or equal to 10 seconds; and the total afterflame time for all five specimens (t1 plus t2 for all five specimens) must be less than or equal to 50 seconds; and the second afterflame time plus the afterglow time for each individual specimen (t2 + t3) must be less than or equal to 30 seconds; and no specimen can flame or glow up to the holding clamp; and the cotton indicator cannot be ignited by flaming particles or drops. To achieve a rating of V-1, the afterflame times t1 and t2 for each individual specimen must be less than or equal to 30 seconds; and the total afterflame time for all five specimens (t1 plus t2 for all five specimens) must be less than or equal to 250 seconds; and the second afterflame time plus the afterglow time for each individual specimen (t2 + t3) must be less than or equal to 60 seconds; and no specimen can flame or glow up to the holding clamp; and the cotton indicator cannot be ignited by flaming particles or drops. To achieve a rating of V-2, the afterflame times t1 and t2 for each individual specimen must be less than or equal to 30 seconds; and the total afterflame time for all five specimens (t1 plus t2 for all five specimens) must be less than or equal to 250 seconds; and the second afterflame time plus the afterglow time for each individual specimen (t2 + t3) must be less than or equal to 60 seconds; and no specimen can flame or glow up to the holding clamp; but the cotton indicator can be ignited by flaming particles or drops. Compositions not satisfying the V-2 requirements are considered to have failed.

Disperse phase particle mean cross-sectional area, expressed in units of micrometer², was determined as follows. Scanning electron micrographs were obtained at 1000 X magnification using a Zeiss EVO40XVP scanning electron microscope under scanning electron (SE) mode with brightness and contrast automatically adjusted under high vacuum conditions. Prior to microscopy, samples were etched in toluene for 15 seconds at about 23°C to dissolve the poly(phenylene ether) component of the disperse phase particles. Scanning electron micrographs so obtained were analyzed using Clemex Vision PE version 6.0.035 software, focusing on particles that were completely within the image (i.e., omitting from the analysis those particles touching the edge of the image frame). Partially overlapping particles were analyzed as separate particles. The image analysis yielded a distribution of particle sizes, which was statistically analyzed with Minitab software, version 16, to determine the mean and standard deviation of the disperse phase particle cross-sectional area for each composition. In Table 2, the mean and standard deviation of the cross-sectional area are listed in the row labeled "Mean particle size ± standard deviation ((µm²)".

The Table 2 test results show that Example 1 with 5 parts by weight (4.74 weight percent) flame retardant exhibited a UL 94 V-2 rating, while Example 2 with 6 parts by weight (5.64 weight percent) flame retardant and Example 3 with 7 parts by weight (6.52 weight percent) flame retardant exhibited UL 94 V-1 ratings. Higher flame retardant amounts were required to achieve comparable ratings for polyamide-6,6 compositions with flame retardant but without poly(phenylene ether). Specifically, note that Comparative Example 8 with 9 parts by weight (8.26 weight percent) flame retardant exhibited a V-2 rating, and Comparative Example 9 with 12 parts by weight (10.71 weight percent) flame retardant exhibited a V-0 rating. Note also that Examples 1, 2, and 3 exhibited disperse phase particle mean cross-sectional areas of 0.391 ± 0.389 micrometer², 0.438 ± 0.558 micrometer², and 0.355 ± 0.330 micrometer², whereas the comparative examples all exhibit particle sizes with substantially higher means and standard deviations.

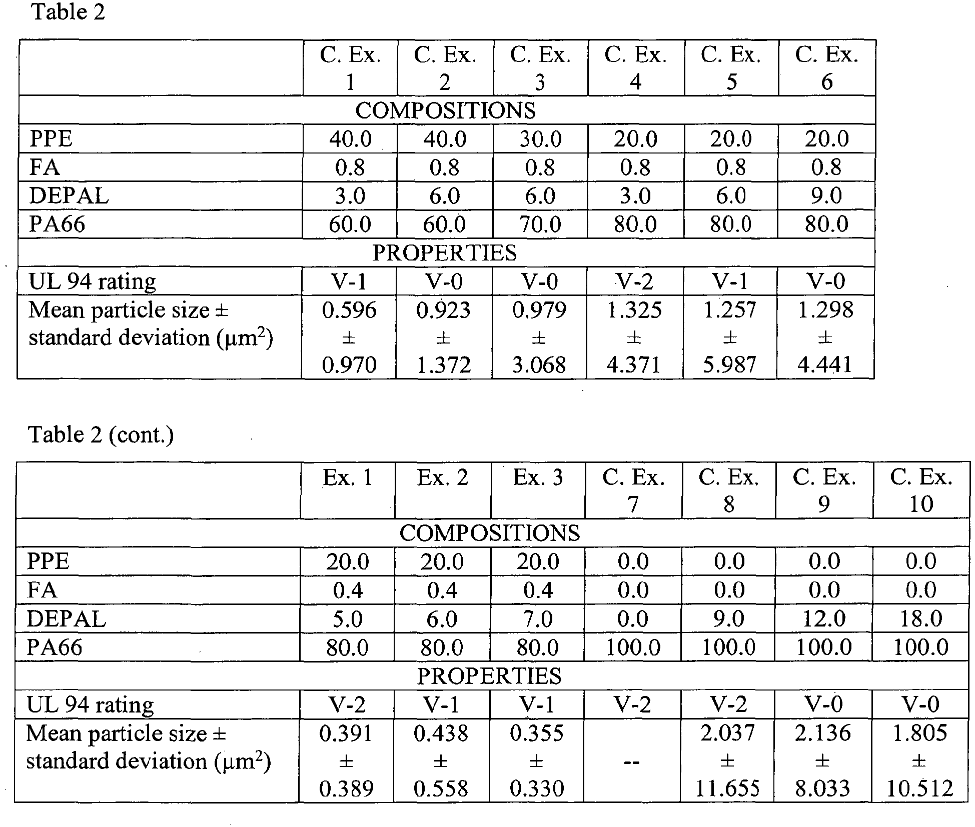

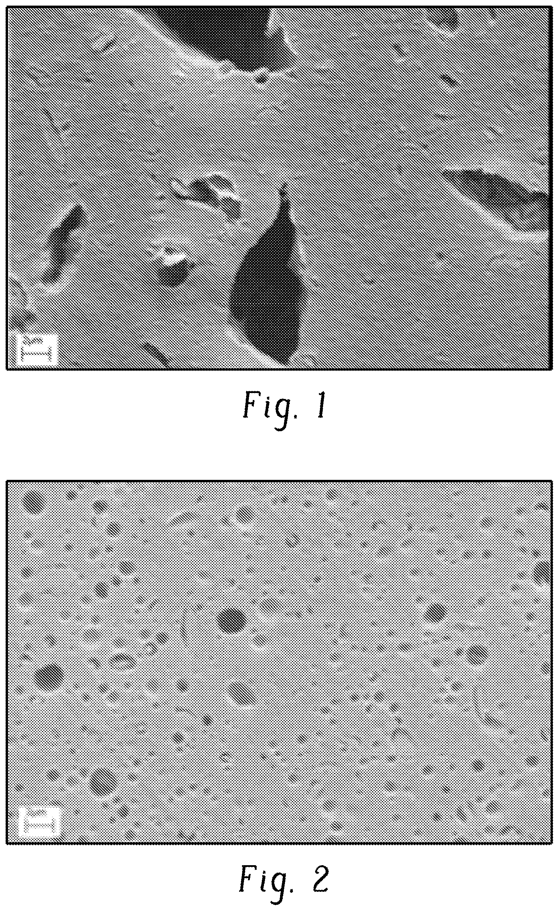

The ability of the poly(phenylene ether) to facilitate dispersion of the flame retardant in polyamide-6,6 is further illustrated by Figures 1 and 2. These figures are scanning electron micrographs of surfaces of the Comparative Example 9 and Example 2 compositions, respectively, that had been etched with toluene for 15 seconds. Figure 1 shows that compounding polyamide-6,6 with flame retardant results in disperse phase particles with a mean cross-section area larger than 2 micrometer². In contrast, Figure 2 shows that pre-compounding poly(phenylene ether), compatibilizing agent, and flame retardant with a portion of polyamide-6,6 to form an intermediate composition, following by compounding the intermediate composition with the remainder of polyamide-6,6 yields a composition in which the poly(phenylene ether) and the flame retardant are well dispersed as particles having a mean cross-sectional area of 0.438 micrometer².

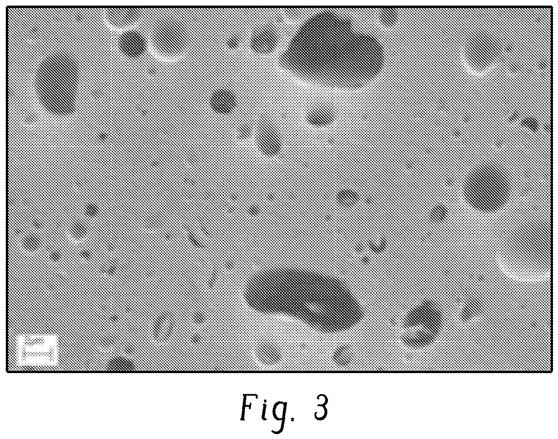

Comparison of Figures 2 and 3 illustrates the effect of the compounding/dilution step on particle size. Figure 3 corresponds to Comparative Example 5, which is similar in composition to Figure 2's Example 2. The Comparative Example 5 composition was prepared in a single extrusion process, whereas the Example 2 composition was prepared by a two-step process in which the first step was preparing an intermediate composition in which the concentrations of all non-polyamide components are twice their concentrations in the final composition, then compounding that intermediate composition with an equal weight of polyamide to form the final composition. It is evident that the disperse phase particle size in Figure 2 (Example 2; mean cross-sectional area of 0.438 micrometer²) is substantially smaller than the disperse phase particle size in Figure 3 (Comparative Example 5; mean cross-sectional area of 1.257 micrometer²).

### EXAMPLES 4-17, COMPARATIVE EXAMPLE 11

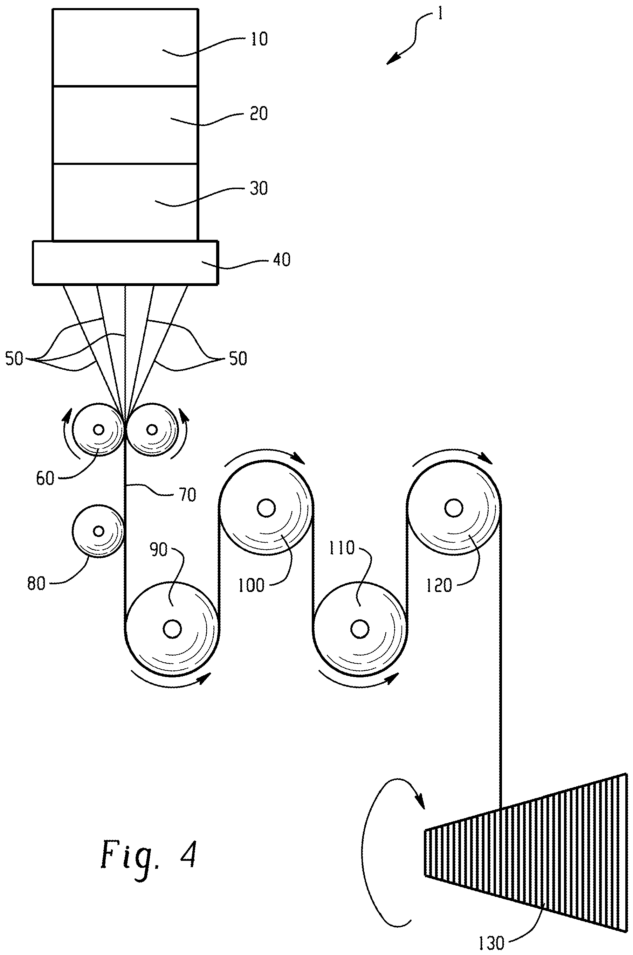

Fibers were produced on a Hills, Inc. (West Melbourne, Florida, USA), Model GHP pilot fiber line, with a 1.25 inch diameter extrusion screw, a 2:1 compression ratio, and a spinneret having 144 die holes of 0.60 millimeter diameter. The screen pack had five layers, with 200 mesh (75 micrometer opening) as the finest screen. Figure 4 is a schematic diagram of a fiber spinning apparatus 1 comprising an extruder 10 that prepares a molten blend of polyamide and poly(phenylene ether); a metering pump 20 that controls the flow of the molten blend from the extruder; a filter pack 30 that removes from the molten blend insoluble particles with the potential to interfere with fiber spinning; spinneret 40 through which individual fibers (or monofilaments) 50 are extruded; convergence guide 60 which combines individual fibers 50 to form a yarn 70; finish applicator 80 which can, optionally, apply a finish to the yarns (in these experiments no finish was applied to the yarns); denier roll 90, feed roll 100, draw roll 110, and relax roll 120 to lengthen the yarn; and bobbin 130 to gather the lengthened yarn. The fibers thus obtained were evaluated according to the tests reported in Table 3.

In Table 3, temperature, expressed in units of degrees centigrade, is measured downstream of the extruder and upstream of the metering pump; pack pressure, expressed in units of megapascals, is measured just upstream of the filter pack; melt pump speed, expressed in units of rotations per minute, is the metering pump motor rotation rate; denier roll speed, expressed in units of meters/minute is the take-up rate of the denier roll; and winder speed, expressed in units of meters/minute, is the rate at which the extruded fiber is collected on the bobbins.

Denier Per Filament (dpf) is a measure of the mass of a 9,000 meter long individual filament or individual staple fiber if it were continuous. The dpf is determined by dividing the yarn denier by the number of filaments in the yarn. Denier per filament was determined by winding the fiber bundle onto a 1 meter circumference wheel for 90 revolutions. This sample is weighed in grams, multiplied by 100 and then divided by the number of fibers in the bundle, 144, to determine the dpf.

Draw ratio is a measure of the degree to which extruded fibers are stretched after extrusion but before hardening. While extruded fibers are solidifying, or in some cases even after they have hardened, the filaments may be drawn to impart strength. Drawing pulls the molecular chains together and orients them along the fiber axis, creating a considerably stronger yarn. The draw ratio is expressed as (final length after the draw : the initial length before the draw).

Maximum load is the load measured when the slope of the stress strain curve is zero. This is generated using an Instron 5500 Series Electromechanical Testing System with the tensile stress strain curve and properties generated using the Intron Bluehill analysis system. The units are in grams force.

Tenacity is the maximum specific strength of a fiber or yarn that is developed in a tensile test taken to rupture point. Here, the objective measure of tenacity is the maximum load divided by the total denier (i.e., load at rupture; expressed in grams per denier) for a yarn containing 144 filaments.

Strain at maximum load is defined as the percent elongation of the material at the point of maximum load.

Results are summarized in Table 3. Using the Example 1 and 3 compositions, it was possible to spin fibers with a variety of fiber diameters (Examples 4-17), including fiber as small as 2.0 dpf for the Example 1 composition and 3.2 dpf for the Example 3 composition. The fibers produced from the Example 1 and 3 compositions could be collected on bobbins. Pack pressure during the spinning process was measured for the Example 1 composition and the Comparative Example 9 composition. For the Comparative Example 9 composition, pack pressure climbed rapidly, reaching 500 pounds per square inch (3.45 megapascals) in about one hour. In the same period, pack pressure for the Example 1 composition had reached only about 200 pounds per square inch (1.38 megapascals). It was not possible to produce continuous fibers from the Comparative Example 9 composition, because of rapid pack pressure build up and frequent strand breaks. Accordingly, no fiber properties are available for Comparative Example 9.

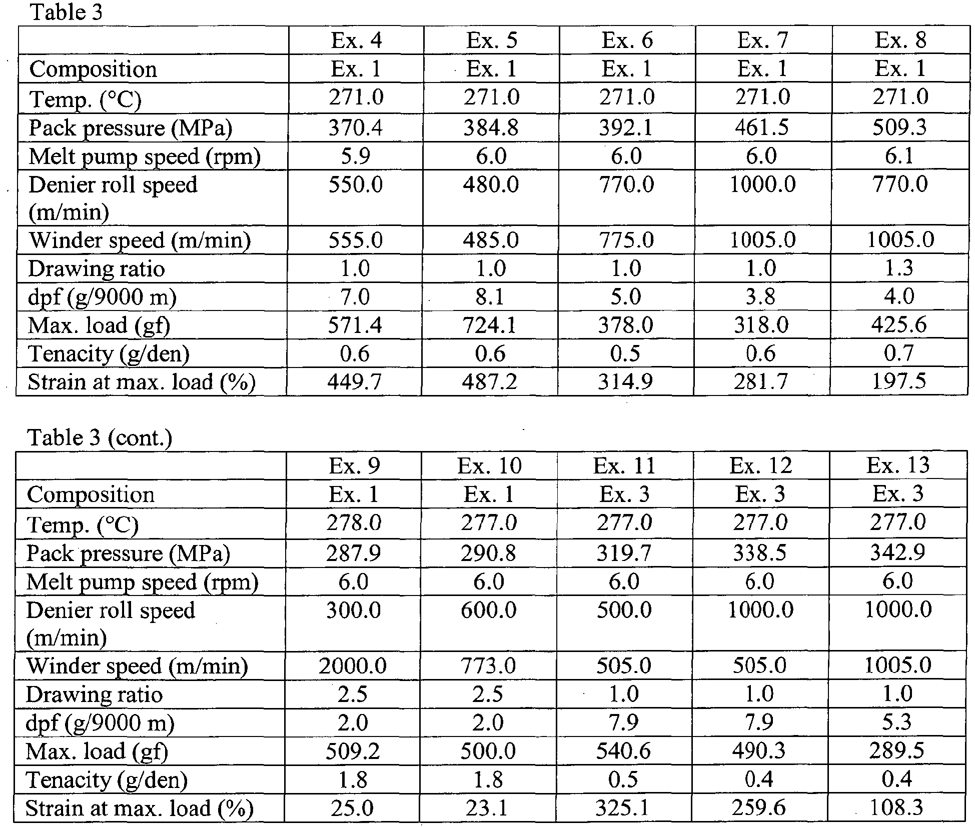

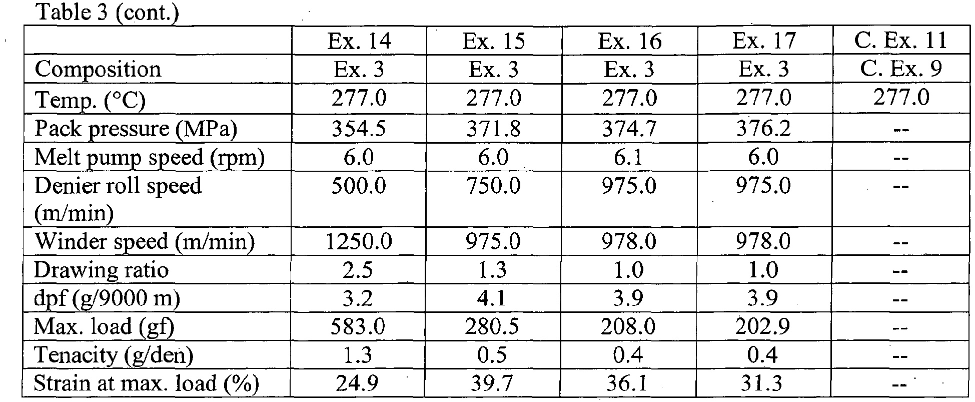

The flammability of fibers prepared from the Example 1, Example 3, and Comparative Example 7 (neat polyamide-6,6) compositions was evaluated as follows. Multifilaments containing 90 bundles of 144 filaments each were prepared from each composition. A length of yarn was suspended vertically, and a natural gas flame was applied to the bottom end of the yarn for 10 seconds. The yarns prepared from the Example 1 and Example 3 compositions self-extinguished within a few seconds of the flame being removed from the yarn, and no dripping of flaming droplets was observed. The yarn prepared from the Comparative Example 7 composition (neat polyamide-6,6) burned slowly and dripped flaming droplets while the flame was applied, and after the flame was removed molten flaming droplets continued to drip and ignited a cotton ball under the yarn.

## Claims

1. A fiber comprising a composition comprising the product of melt blending:
58 to 93.9 weight percent of a polyamide consisting of polyamide-6,6;
5 to 35 weight percent of a poly(phenylene ether);
1 to 10 weight percent of a flame retardant comprising a metal dialkylphosphinate; and
0.1 to 2 weight percent of a compatibilizing agent for the polyamide and the poly(phenylene ether);
wherein all weight percents are based on the total weight of the composition;
wherein the composition excludes poly(phenylene ether)-polysiloxane block copolymers; and
wherein the composition comprises a continuous phase comprising the polyamide, and a disperse phase comprising the poly(phenylene ether); wherein the disperse phase comprises disperse phase particles have a mean cross-sectional area less than or equal to 0.9 micrometer², based on the number of disperse phase particles, as measured by scanning electron microscopy.

2. The fiber of claim 1, wherein the mean cross-sectional area is associated with a standard deviation less than or equal to 0.9 micrometer².

3. The fiber of claim 1 or 2, wherein said melt blending comprises
melt blending the poly(phenylene ether), the flame retardant, and the compatibilizing agent with 15 to 70 weight percent of the polyamide, based on the weight of the polyamide, to form an intermediate composition; and
melt blending the intermediate composition with the remainder of the polyamide to form the composition.

4. The fiber of any of claims 1-3, wherein the composition excludes polymers other than the polyamide and the poly(phenylene ether).

5. The fiber of any of claims 1-4,
wherein the polyamide-6,6 has a relative viscosity of 20 to 50 measured at 23°C according to ASTM D789-07 in 90% formic acid;
wherein the polyamide amount is 66 to 82.8 weight percent;
wherein the poly(phenylene ether) is a poly(2,6-dimethyl-1,4-phenylene ether) having an intrinsic viscosity of 0.25 to 0.35 as measured at 25°C in chloroform;
wherein the poly(phenylene ether) amount is 15 to 25 weight percent;
wherein the poly(phenylene ether) and the polyamide are present in a weight ratio of 15.3:84.7 to 25:75;
wherein the flame retardant consists of aluminum tris(diethylphosphinate);
wherein the flame retardant amount is 2 to 9 weight percent;
wherein the compatibilizing agent comprises fumaric acid;
wherein the compatibilizing agent amount is 0.2 to 1 weight percent;
wherein the mean cross-sectional area is associated with a standard deviation less than or equal to 0.9 micrometer²; and
wherein the composition excludes polymers other than the polyamide and the poly(phenylene ether).

6. A yarn, fabric, or article comprising the fiber of any of claims 1-5.

7. A composition comprising the product of melt blending:
58 to 93.9 weight percent of a polyamide consisting of polyamide-6,6;
5 to 35 weight percent of a poly(phenylene ether);
1 to 10 weight percent of a flame retardant comprising a metal dialkylphosphinate; and
0.1 to 2 weight percent of a compatibilizing agent for the polyamide and the poly(phenylene ether);
wherein all weight percents are based on the total weight of the composition;
wherein the composition excludes poly(phenylene ether)-polysiloxane block copolymers; and
wherein the composition comprises a continuous phase comprising the polyamide, and a disperse phase comprising the poly(phenylene ether); wherein the disperse phase particles have a mean cross-sectional area less than or equal to 0.9 micrometer², based on the number of disperse phase particles, as measured by scanning electron microscopy.

8. The composition of claim 7, wherein the mean cross-sectional area is associated with a standard deviation less than or equal to 0.9 micrometer².

9. The composition of claim 7 or 8, wherein said melt blending comprises
melt blending the poly(phenylene ether), the flame retardant, and the compatibilizing agent with 20 to 60 weight percent of the polyamide, based on the weight of the polyamide, to form an intermediate composition; and
melt blending the intermediate composition with the remainder of the polyamide to form the composition.

10. The composition of any of claims 7-9, excluding polymers other than the polyamide and the poly(phenylene ether).

11. The composition of claim 7,
wherein the polyamide-6,6 has a relative viscosity of 20 to 50 measured at 23°C according to ASTM D789-07 in 90% formic acid;
wherein the polyamide amount is 66 to 82.8 weight percent;
wherein the poly(phenylene ether) is a poly(2,6-dimethyl-1,4-phenylene ether) having an intrinsic viscosity of 0.25 to 0.35 as measured at 25°C in chloroform;
wherein the poly(phenylene ether) amount is 15 to 25 weight percent;
wherein the poly(phenylene ether) and the polyamide are present in a weight ratio of 18.1:81.9 to 25:75;
wherein the flame retardant consists of aluminum tris(diethylphosphinate);
wherein the flame retardant amount is 2 to 9 weight percent;
wherein the compatibilizing agent comprises fumaric acid;
wherein the compatibilizing agent amount is 0.2 to 1 weight percent;
wherein the mean cross-sectional area is associated with a standard deviation less than or equal to 0.9 micrometer²; and
wherein the composition excludes polymers other than the polyamide and the poly(phenylene ether).

12. The composition of claim 11, wherein said melt blending comprises
melt blending the poly(phenylene ether), the flame retardant, and the compatibilizing agent with 20 to 60 weight percent of the polyamide, based on the weight of the polyamide, to form an intermediate composition; and
melt blending the intermediate composition with the remainder of the polyamide to form the composition.

13. A method of forming a composition, the method comprising:
melt blending
58 to 93.9 weight percent of a polyamide consisting of polyamide-6,6;
5 to 35 weight percent of a poly(phenylene ether);
1 to 10 weight percent of a flame retardant comprising a metal dialkylphosphinate; and
0.1 to 2 weight percent of a compatibilizing agent for the polyamide and the poly(phenylene ether)
to form the composition;
wherein all weight percents are based on the total weight of the composition;
wherein the composition excludes poly(phenylene ether)-polysiloxane block copolymers; and
wherein the composition comprises a continuous phase comprising the polyamide, and a disperse phase comprising the poly(phenylene ether); wherein the disperse phase comprises particles having a mean cross-sectional area less than or equal to 0.9 micrometer², as measured by scanning electron microscopy.

14. The method of claim 13, wherein said melt blending comprises
melt blending in a first pass through a first extruder the poly(phenylene ether), the flame retardant, and the compatibilizing agent with 15 to 70 weight percent of the polyamide to form an intermediate composition; and
melt blending in a second pass through a second extruder that is the same as or different from the first extruder the intermediate composition with the remainder of the polyamide to form the composition.

15. The method of claim 13,
wherein the polyamide-6,6 has a relative viscosity of 20 to 50 measured at 23°C according to ASTM D789-07 in 90% formic acid;
wherein the polyamide amount is 66 to 82.8 weight percent;
wherein the poly(phenylene ether) is a poly(2,6-dimethyl-1,4-phenylene ether) having an intrinsic viscosity of 0.25 to 0.35 as measured at 25°C in chloroform;
wherein the poly(phenylene ether) amount is 15 to 25 weight percent; wherein the poly(phenylene ether) and the polyamide are present in a weight ratio of 18.1:81.9 to 25:75;
wherein the flame retardant consists of aluminum tris(diethylphosphinate); wherein the flame retardant amount is 2 to 9 weight percent;
wherein the compatibilizing agent comprises fumaric acid;
wherein the mean cross-sectional area is associated with a standard deviation less than or equal to 0.9 micrometer²; and
wherein the compatibilizing agent amount is 0.2 to 1 weight percent.

## Patentansprüche

1. Faser, umfassend eine Zusammensetzung umfassend das Produkt des Schmelzmischens von:
58 bis 93,9 Gewichtsprozent eines Polyamids bestehend aus Polyamid-6,6;
5 bis 35 Gewichtsprozent eines Poly(phenylenether)s;
1 bis 10 Gewichtsprozent eines Flammschutzmittels umfassend ein Metalldialkylphosphinat; und
0,1 bis 2 Gewichtsprozent eines Kompatibilierungsmittels bzw. Verträglichkeitsmachers für das Polyamid und den Poly(phenylenether);
wobei alle Gewichtsprozentangaben auf das Gesamtgewicht der Zusammensetzung bezogen sind;
wobei die Zusammensetzung Poly(phenylenether)-Polysiloxan-Block-Copolymere ausschließt; und
wobei die Zusammensetzung eine das Polyamid umfassende kontinuierliche Phase und eine den Poly(phenylenether) umfassende disperse Phase umfasst; wobei die disperse Phase Dispers-Phasen-Teilchen mit einer mittleren Querschnittsfläche von weniger als oder gleich 0,9 Mikrometer², bezogen auf die Anzahl der Dispers-Phasen-Teilchen, wie gemessen durch Rasterelektronenmikroskopie, aufweist.

2. Faser nach Anspruch 1, wobei die mittlere Querschnittsfläche mit einer Standardabweichung von weniger als oder gleich 0,9 Mikrometer² verbunden ist.

3. Faser nach Anspruch 1 oder 2, wobei das Schmelzmischen Schmelzmischen des Poly(phenylenether)s, des Flammschutzmittels, und des Kompatibilisierungsmittels mit 15 bis 70 Gewichtsprozent des Polyamids, bezogen auf das Gewicht des Polyamids, zur Bildung einer intermediären Zusammensetzung; und
Schmelzmischen der intermediären Zusammensetzung mit dem Rest des Polyamids zur Bildung der Zusammensetzung umfasst.

4. Faser nach irgendeinem der Ansprüche 1 bis 3, wobei die Zusammensetzung andere Polymere als das Polyamid und den Poly(phenylenether) ausschließt.

5. Faser nach irgendeinem der Ansprüche 1 bis 4,
wobei das Polyamid-6,6 eine relative Viskosität von 20 bis 50 gemessen bei 23 °C gemäß ASTM D789-07 in 90%iger Ameisensäure aufweist;
wobei die Polyamidmenge 66 bis 82,8 Gewichtsprozent beträgt;
wobei der Poly(phenylenether) ein Poly(2,6-dimethyl-1,4-phenylenether) mit einer intrinsischen Viskosität bzw. Strukturviskosität von 0,25 bis 0,35 wie gemessen bei 25°C in Chloroform ist;
wobei die Poly(phenylenether)-Menge 15 bis 25 Gewichtsprozent beträgt;
wobei der Poly(phenylenether) und das Polyamid in einem Gewichtsverhältnis von 15,3:84,7 bis 25:75 vorliegen;
wobei das Flammschutzmittel aus Aluminiumtris(diethylphosphinat) besteht;
wobei die Flammschutzmittel-Menge 2 bis 9 Gewichtsprozent beträgt;
wobei das Kompatibilisierungsmittel Fumarsäure umfasst;
wobei die Kompatibilisierungsmittel-Menge 0,2 bis 1 Gewichtsprozent beträgt;
wobei die mittlere Querschnittsfläche mit einer Standardabweichung von weniger als oder gleich 0,9 Mikrometer² verbunden ist; und
wobei die Zusammensetzung andere Polymere als das Polyamid und den Poly(phenylenether) ausschließt.

6. Garn, Gewebe, oder Gegenstand, umfassend die Faser nach irgendeinem der Ansprüche 1 bis 5.

7. Zusammensetzung, umfassend das Produkt des Schmelzmischens von:
58 bis 93,9 Gewichtsprozent eines Polyamids bestehend aus Polyamid-6,6;
5 bis 35 Gewichtsprozent eines Poly(phenylenether)s;
1 bis 10 Gewichtsprozent eines Flammschutzmittels umfassend ein Metalldialkylphosphinat; und
0,1 bis 2 Gewichtsprozent eines Kompatibilierungsmittels bzw. Verträglichkeitsmachers für das Polyamid und den Poly(phenylenether);
wobei alle Gewichtsprozentangaben auf das Gesamtgewicht der Zusammensetzung bezogen sind;
wobei die Zusammensetzung Poly(phenylenether)-Polysiloxan-Block-Copolymere ausschließt; und
wobei die Zusammensetzung eine das Polyamid umfassende kontinuierliche Phase und eine den Poly(phenylenether) umfassende disperse Phase umfasst; wobei die Dispers-Phasen-Teilchen eine mittlere Querschnittsfläche von weniger als oder gleich 0,9 Mikrometer², bezogen auf die Anzahl der Dispers-Phasen-Teilchen, wie gemessen durch Rasterelektronenmikroskopie, aufweisen.

8. Zusammensetzung nach Anspruch 7, wobei die mittlere Querschnittsfläche mit einer Standardabweichung von weniger als oder gleich 0,9 Mikrometer² verbunden ist.

9. Zusammensetzung nach Anspruch 7 oder 8, wobei das Schmelzmischen Schmelzmischen des Poly(phenylenether)s, des Flammschutzmittels, und des Kompatibilisierungsmittels mit 20 bis 60 Gewichtsprozent des Polyamids, bezogen auf das Gewicht des Polyamids, zur Bildung einer intermediären Zusammensetzung; und
Schmelzmischen der intermediären Zusammensetzung mit dem Rest des Polyamids zur Bildung der Zusammensetzung umfasst.

10. Zusammensetzung nach irgendeinem der Ansprüche 7 bis 9, welche andere Polymere als das Polyamid und den Poly(phenylenether) ausschließt.

11. Zusammensetzung nach Anspruch 7,
wobei des Polyamid-6,6 eine relative Viskosität von 20 bis 50 gemessen bei 23 °C gemäß ASTM D789-07 in 90%iger Ameisensäure aufweist;
wobei die Polyamidmenge 66 bis 82,8 Gewichtsprozent beträgt;
wobei der Poly(phenylenether) ein Poly(2,6-dimethyl-1,4-phenylenether) mit einer intrinsischen Viskosität bzw. Strukturviskosität von 0,25 bis 0,35 wie gemessen bei 25°C in Chloroform ist;
wobei die Poly(phenylenether)-Menge 15 bis 25 Gewichtsprozent beträgt;
wobei der Poly(phenylenether) und das Polyamid in einem Gewichtsverhältnis von 18,1:81,9 bis 25:75 vorliegen;
wobei das Flammschutzmittel aus Aluminiumtris(diethylphosphinat) besteht;
wobei die Flammschutzmittel-Menge 2 bis 9 Gewichtsprozent beträgt;
wobei das Kompatibilisierungsmittel Fumarsäure umfasst;
wobei die Kompatibilisierungsmittel-Menge 0,2 bis 1 Gewichtsprozent beträgt;
wobei die mittlere Querschnittsfläche mit einer Standardabweichung von weniger als oder gleich 0,9 Mikrometer² verbunden ist; und
wobei die Zusammensetzung andere Polymere als das Polyamid und den Poly(phenylenether) ausschließt.

12. Zusammensetzung nach Anspruch 11, wobei das Schmelzmischen Schmelzmischen des Poly(phenylenether)s, des Flammschutzmittels, und des Kompatibilisierungsmittels mit 20 bis 60 Gewichtsprozent des Polyamids, bezogen auf das Gewicht des Polyamids, zur Bildung einer intermediären Zusammensetzung; und
Schmelzmischen der intermediären Zusammensetzung mit dem Rest des Polyamids zur Bildung der Zusammensetzung umfasst.

13. Verfahren zur Bildung einer Zusammensetzung, wobei das Verfahren umfasst:
Schmelzmischen von
58 bis 93,9 Gewichtsprozent eines Polyamids bestehend aus Polyamid-6,6;
5 bis 35 Gewichtsprozent eines Poly(phenylenether)s;
1 bis 10 Gewichtsprozent eines Flammschutzmittels umfassend ein Metalldialkylphosphinat; und
0,1 bis 2 Gewichtsprozent eines Kompatibilisierungsmittels bzw. Verträglichkeitsmachers für das Polyamid und den Poly(phenylenether) zur Bildung der Zusammensetzung;
wobei alle Gewichtsprozentangaben auf das Gesamtgewicht der Zusammensetzung bezogen sind;
wobei die Zusammensetzung Poly(phenylenether)-Polysiloxan-Block-Copolymere ausschließt; und
wobei die Zusammensetzung eine das Polyamid umfassende kontinuierliche Phase und eine den Poly(phenylenether) umfassende disperse Phase umfasst; wobei die disperse Phase Teilchen mit einer mittleren Querschnittsfläche von weniger als oder gleich 0,9 Mikrometer², wie gemessen durch Rasterelektronenmikroskopie, umfasst.

14. Verfahren nach Anspruch 13, wobei das Schmelzmischen Schmelzmischen des Poly(phenylenether)s, des Flammschutzmittels und des Kompatibilisierungsmittels mit 15 bis 70 Gewichtsprozent des Polyamids in einem ersten Durchgang durch einen ersten Extruder, um eine intermediäre Zusammensetzung zu bilden; und Schmelzmischen der intermediären Zusammensetzung mit dem Rest des Polyamids in einen zweiten Durchgang durch einen zweiten Extruder, welcher der gleiche wie der erste Extruder ist oder verschieden von dem ersten Extruder ist, um die Zusammensetzung zu bilden, umfasst.

15. Verfahren nach Anspruch 13,
wobei des Polyamid-6,6 eine relative Viskosität von 20 bis 50 gemessen bei 23 °C gemäß ASTM D789-07 in 90%iger Ameisensäure aufweist;
wobei die Polyamidmenge 66 bis 82,8 Gewichtsprozent beträgt;
wobei der Poly(phenylenether) ein Poly(2,6-dimethyl-1,4-phenylenether) mit einer intrinsischen Viskosität bzw. Strukturviskosität von 0,25 bis 0,35 wie gemessen bei 25°C in Chloroform ist;
wobei die Poly(phenylenether)-Menge 15 bis 25 Gewichtsprozent beträgt;
wobei der Poly(phenylenether) und das Polyamid in einem Gewichtsverhältnis von 18,1:81,9 bis 25:75 vorliegen;
wobei das Flammschutzmittel aus Aluminiumtris(diethylphosphinat) besteht;
wobei die Flammschutzmittel-Menge 2 bis 9 Gewichtsprozent beträgt;
wobei das Kompatibilisierungsmittel Fumarsäure umfasst;
wobei die mittlere Querschnittsfläche mit einer Standardabweichung von weniger als oder gleich 0,9 Mikrometer² verbunden ist; und
wobei die Kompatibilisierungsmittel-Menge 0,2 bis 1 Gewichtsprozent beträgt.

## Revendications

1. Fibre comprenant une composition comprenant le produit du mélange à l'état fondu :
de 58 à 93,9 pourcents en poids d'un polyamide consistant en polyamide-6,6 ;
de 5 à 35 pourcents en poids d'un poly(phénylène éther) ;
de 1 à 10 pourcents en poids d'un retardateur de flamme comprenant un dialkylphosphinate métallique ; et
de 0,1 à 2 pourcents en poids d'un agent de compatibilisation pour le polyamide et le poly(phénylène éther) ;
tous les pourcentages en poids étant rapportés au poids total de la composition ;
la composition ne contenant pas de copolymères à blocs poly(phénylène éther)-polysiloxane ; et
la composition comprenant une phase continue comprenant le polyamide, et une phase dispersée comprenant le poly(phénylène éther) ; la phase dispersée comprenant des particules de phase dispersée présentant une aire moyenne en coupe transversale inférieure ou égale à 0,9 micromètre², par rapport au nombre de particules de la phase dispersée, telle que mesurée au microscope électronique à balayage.

2. Fibre selon la revendication 1, dans laquelle l'aire moyenne en coupe transversale est associée à un écart-type inférieur ou égal à 0,9 micromètre².

3. Fibre selon la revendication 1 ou 2, ledit mélange à l'état fondu comprenant :
le mélange à l'état fondu du poly(phénylène éther), du retardateur de flamme et de l'agent de compatibilisation, avec 15 à 70 pourcents en poids du polyamide, par rapport au poids du polyamide, pour former une composition intermédiaire ; et
le mélange à l'état fondu de la composition intermédiaire avec le reste du polypeptide pour former la composition.

4. Fibre selon l'une quelconque des revendications 1 à 3, dans laquelle la composition ne contient pas de polymères autres que le polyamide et le poly(phénylène éther).

5. Fibre selon l'une quelconque des revendications 1 à 4,
le polyamide-6,6 présentant une viscosité relative de 20 à 50, mesurée à 23 °C selon ASTM D789-07 dans de l'acide formique à 90 % ;
la quantité du polyamide étant de 66 à 82,8 pourcents en poids ;
le poly(phénylène éther) étant un poly(2,6-diméthyl-1,4-phénylène éther) présentant une viscosité intrinsèque de 0,25 à 0,35, telle que mesurée à 25 °C dans le chloroforme ;
la quantité du poly(phénylène éther) étant de 15 à 25 pourcents en poids ;
le poly(phénylène éther) et le polyamide étant présents selon un rapport en poids de 15,3:84,7 à 25:75 ;
le retardateur de flamme consistant en tris(diéthylphosphinate) d'aluminium ;
la quantité du retardateur de flamme étant de 2 à 9 pourcents en poids ;
l'agent de compatibilisation comprenant de l'acide fumarique ;
la quantité de l'agent de compatibilisation étant de 0,2 à 1 pourcent en poids ;
l'aire moyenne en coupe transversale étant associée à un écart-type inférieur ou égal à 0,9 micromètre² ; et
la composition ne contenant pas de polymères autres que le polyamide et le poly(phénylène éther).

6. Fil, tissu ou article comprenant la fibre selon l'une quelconque des revendications 1 à 5.

7. Composition comprenant le produit du mélange à l'état fondu
de 58 à 93,9 pourcents en poids d'un polyamide consistant en polyamide-6,6 ;
de 5 à 35 pourcents en poids d'un poly(phénylène éther) ;
de 1 à 10 pourcents en poids d'un retardateur de flamme comprenant un dialkylphosphinate métallique ; et
de 0,1 à 2 pourcents en poids d'un agent de compatibilisation pour le polyamide et le poly(phénylène éther) ;
tous les pourcentages en poids étant rapportés au poids total de la composition ;
la composition ne contenant pas de copolymères à blocs poly(phénylène éther)-polysiloxane ; et
la composition comprenant une phase continue comprenant le polyamide, et une phase dispersée comprenant le poly(phénylène éther) ; les particules de la phase dispersée présentant une aire moyenne en coupe transversale inférieure ou égale à 0,9 micromètre², par rapport au nombre de particules de la phase dispersée, telle que mesurée au microscope électronique à balayage.

8. Composition selon la revendication 7, dans laquelle l'aire moyenne en coupe transversale est associée à un écart-type inférieur ou égal à 0,9 micromètre².

9. Composition selon la revendication 7 ou 8, ledit mélange à l'état fondu comprenant
le mélange à l'état fondu du poly(phénylène éther), du retardateur de flamme et de l'agent de compatibilisation, avec 20 à 60 pourcents en poids du polyamide, par rapport au poids du polyamide, pour former une composition intermédiaire ; et
le mélange à l'état fondu de la composition intermédiaire avec le reste du polyamide pour former la composition.

10. Composition selon l'une quelconque des revendications 7 à 9, ne contenant pas de polymères autres que le polyamide et le poly(phénylène éther).

11. Composition selon la revendication 7,
le polyamide-6,6 présentant une viscosité relative de 20 à 50, mesurée à 23 °C selon ASTM D789-07 dans de l'acide formique à 90 % ;
la quantité du polyamide étant de 66 à 82,8 pourcents en poids ;
le poly(phénylène éther) étant un poly(2,6-diméthyl-1,4-phénylène éther) présentant une viscosité intrinsèque de 0,25 à 0,35, telle que mesurée à 25 °C dans le chloroforme ;
la quantité du poly(phénylène éther) étant de 15 à 25 pourcents en poids ;
le poly(phénylène éther) et le polyamide étant présents selon un rapport en poids de 18,1:81,9 à 25:75 ;
le retardateur de flamme consistant en tris(diéthylphosphinate) d'aluminium ;
la quantité du retardateur de flamme étant de 2 à 9 pourcents en poids ;
l'agent de compatibilisation comprenant de l'acide fumarique ;
la quantité de l'agent de compatibilisation étant de 0,2 à 1 pourcent en poids ;
l'aire moyenne en coupe transversale étant associée à un écart-type inférieur ou égal à 0,9 micromètre² ; et
la composition ne contenant pas de polymères autres que le polyamide et le poly(phénylène éther).

12. Composition selon la revendication 11, ledit mélange à l'état fondu comprenant :
le mélange à l'état fondu du poly(phénylène éther), du retardateur de flamme et de l'agent de compatibilisation avec 20 à 60 pourcents en poids du polyamide, par rapport au poids du polyamide, pour former une composition intermédiaire ; et
le mélange à l'état fondu de la composition intermédiaire avec le reste du polyamide pour former la composition.

13. Procédé de formation d'une composition, le procédé comprenant :
le mélange à l'état fondu
de 58 à 93,9 pourcents en poids d'un polyamide consistant en polyamide-6,6 ;
de 5 à 35 pourcents en poids d'un poly(phénylène éther) ;
de 1 à 10 pourcents en poids d'un retardateur de flamme comprenant un dialkylphosphinate métallique ; et
0,1 à 2 pourcents en poids d'un agent de compatibilisation pour le polyamide et le poly(phénylène éther),
pour former la composition ;
dans lequel tous les pourcentages en poids sont rapportés au poids total de la composition ;
dans lequel la composition ne contient pas de copolymères à blocs poly(phénylène éther)-polysiloxane ; et
dans lequel la composition comprend une phase continue comprenant le polyamide, et une phase dispersée comprenant le poly(phénylène éther) ; la phase dispersée comprenant des particules présentant une aire moyenne en coupe transversale inférieure ou égale à 0,9 micromètre², telle que mesurée au microscope électronique à balayage.

14. Procédé selon la revendication 13, dans lequel ledit mélange à l'état fondu comprend :
le mélange à l'état fondu, dans une première passe à travers une première extrudeuse, du poly(phénylène éther), du retardateur de flamme et de l'agent de compatibilisation, avec 15 à 70 pourcents en poids du polyamide, pour former une composition intermédiaire ; et
le mélange à l'état fondu, dans une deuxième passe à travers une deuxième extrudeuse, qui est la même que la première extrudeuse ou qui est différente de la première extrudeuse, de la composition intermédiaire avec le reste du polyamide, pour former la composition.

15. Procédé selon la revendication 13,
dans lequel le polyamide-6,6 présente une viscosité relative de 20 à 50, mesurée à 23 °C selon ASTM D789-07 dans de l'acide formique à 90 % ;
dans lequel la quantité du polyamide est de 66 à 82,8 pourcents en poids ;
dans lequel le poly(phénylène éther) est un poly(2,6-diméthyl-1,4-phénylène éther) présentant une viscosité intrinsèque de 0,25 à 0,35 , telle que mesurée à 25 °C dans le chloroforme ;
dans lequel la quantité du poly(phénylène éther) est de 15 à 25 pourcents en poids ;
dans lequel le poly(phénylène éther) et le polyamide sont présents selon un rapport en poids de 18,1:81,9 à 25:75 ;
dans lequel le retardateur de flamme consiste en tris(diéthylphosphinate) d'aluminium ;
dans lequel la quantité du retardateur de flamme est de 2 à 9 pourcents en poids ;
dans lequel l'agent de compatibilisation comprend de l'acide fumarique ;
dans lequel l'aire moyenne en coupe transversale est associée à un écart-type inférieur ou égal à 0,9 micromètre² ; et
dans lequel la quantité de l'agent de compatibilisation est de 0,2 à 1 % en poids.
